(19) Europäisches Patentamt / European Patent Office / Office européen des brevets

(11) **EP 2 689 051 B1**

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(21) Anmeldenummer: **12706821.1**

(22) Anmeldetag: **27.02.2012**

(51) Int Cl.:
*C23C 22/68* (2006.01)     *C09D 4/00* (2006.01)
*C09D 183/08* (2006.01)     *C09D 5/08* (2006.01)
*C09D 5/10* (2006.01)     *C23C 18/12* (2006.01)
*C23C 22/48* (2006.01)     *C23C 22/50* (2006.01)

(86) Internationale Anmeldenummer:
**PCT/EP2012/053256**

(87) Internationale Veröffentlichungsnummer:
**WO 2012/130544 (04.10.2012 Gazette 2012/40)**

(54) **WÄSSRIGE KORROSIONSSCHUTZFORMULIERUNG AUF SILANEBASIS**

AQUEOUS CORROSION PROTECTION FORMULATION BASED ON SILANES

FORMULATION AQUEUSE ANTICORROSION À BASE DE SILANE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **25.03.2011 DE 102011006182
07.10.2011 DE 102011084183**

(43) Veröffentlichungstag der Anmeldung:
**29.01.2014 Patentblatt 2014/05**

(73) Patentinhaber: **Evonik Degussa GmbH
45128 Essen (DE)**

(72) Erfinder:
• ALBERT, Philipp
79539 Lörrach (DE)
• JUST, Eckhard
79618 Rheinfelden (DE)

(56) Entgegenhaltungen:
WO-A1-2006/137663     WO-A1-2009/030538
WO-A2-2006/079516

**Beschreibung**

Die vorliegende Erfindung betrifft eine neue Korrosionsschutzformulierung auf der Basis eines wässrigen Silansystems als Bindemittel, ein Verfahren zu deren Herstellung sowie deren Verwendung für Beschichtungen, insbesondere zum Schutz von Metallen vor Korrosion.

Wässrige Silansysteme finden zunehmend Interesse, da sie weniger bzw. keine organischen Lösungsmittel enthalten und deshalb umweltfreundlicher sind. Darüber hinaus können diese Systeme ohne Ex-Schutz eingesetzt werden. Stabile, wässrige Silansysteme sind nicht einfach durch Mischen von Silanen mit Wasser herstellbar, da viele Silane in der wässrigen Phase unlöslich sind und bei Kontakt mit Wasser hydrolysieren und kondensieren. Deshalb werden üblicherweise Silansysteme mit organischen Lösungsmitteln und definierten Mengen an Wasser im Korrosionsschutz eingesetzt. Um die Eigenschaften der Silansysteme zu modifizieren bzw. den Korrosionsschutz zu verbessern, können sie mit Additiven, Pigmenten und Füllstoffen formuliert werden.

Die Herstellung von wasserlöslichen Aminopolysiloxanen wird in EP 0 590 270 beschrieben. Die Aminosilane werden in einer 50-%igen alkoholischen Lösung mit einer entsprechenden Menge Wasser versetzt und bei 60 °C anhydrolysiert. Diese Produkte sind anschließend in Wasser löslich. Nachteilig sind nach wie vor der hohe Gehalt an organischen Lösungsmitteln und der damit einhergehende niedrige Flammpunkt.

DE 103 35 178 beschreibt ebenfalls die Herstellung von wasserlöslichen Silansystemen, z. B. einer Mischung aus 3-Aminopropyltrialkoxysilan und Bis(trialkoxysilylpropyl)amin. Die Silanmischung wird mit einer definierten Wassermenge anhydrolysiert. Aber auch hier enthält die Silanmischung 25 bis 99,99 % Alkohol und ist damit nicht VOC-frei.

In US 5,051,129 wird die Zusammensetzung einer wässrigen Lösung beansprucht, die aus einem wasserlöslichen Aminosilan und einem Alkyltrialkoxysilan besteht. Die Herstellung erfolgt durch Zugabe einer definierten Menge Wasser zur Silanmischung und anschließender Temperierung bei 60 °C. Die so hergestellte Silanmischung wird in einem bestimmten Verhältnis in Wasser gelöst und dient zur Hydrophobierung von Oberflächen.

In EP 0 716 128 werden wasserbasierende organopolysiloxanhaltige Zusammensetzungen, Verfahren zu deren Herstellung und Verwendung beansprucht. Durch Mischen von wasserlöslichen Aminoalkylalkoxysilanen mit Alkyltrialkoxysilanen und/oder Dialkyldialkoxysilanen und Zugabe von Wasser bei einem definierten pH-Wert entstehen organopolysiloxanhaltige Zusammensetzungen. Der entstandene Hydrolysealkohol wird destillativ entfernt. Es werden deshalb VOC-freie wässrige polysiloxanhaltige Zusammensetzungen erhalten, die zur Hydrophobierung von Oberflächen, mineralischen Baustoffen und weiteren Anwendungen eingesetzt werden können.

In WO 2000/39177 wird die Anwendung von Bis-Silylaminosilanen und/oder Bis-Silylpolysulfanen in wässrigen Lösungen beschrieben. Die Silane werden mit Wasser, einem Alkohol und optional Essigsäure gemischt und mindestens 24 Stunden hydrolysiert. Anschließend erfolgt die Anwendung auf Metallen.

US 6,955,728 beschreibt die Anwendung von Acetoxysilanen in Kombination mit anderen Silanen in wässrigen Lösungen und die Anwendung auf Metallen. Unter anderem werden auch Bis(trialkoxysilylpropyl)amine in Kombination mit Acetoxysilanen eingesetzt. Über die Stabilität der wässrigen Lösungen wird keine Aussage gemacht bzw. es wird ein 2-komponentiges System empfohlen, das erst vor der Anwendung vereinigt wird. Die wässrigen Lösungen enthalten zumindest immer den Hydrolysealkohol.

In WO 2004/076717 werden Bis-Silylaminosilane in Kombination mit weiteren Silanen und einem Metallchelat in wässrigen Lösungen eingesetzt. Die Silane werden durch eine Alterung von mindestens 2 Wochen in wässrigen Konzentraten teilweise hydrolysiert. Anschließend wird ein Metallchelat zugesetzt und mit Wasser weiter verdünnt. Darüber hinaus enthalten alle wässrigen Formulierungen nach wie vor den Alkohol aus der Hydrolyse. Die wässrigen Systeme werden zur Vorbehandlung von Metalloberflächen eingesetzt.

WO 2004/076718 betrifft ein Verfahren zur Beschichtung einer metallischen Oberfläche mit einer wässrigen Lösung, die ein partiell hydrolysiertes Silan wie z. B. Bis-Silylaminosilan und ein partiell hydrolysiertes Fluor-haltiges Silan enthält. Durch den Einsatz des Fluor-haltigen Silans werden die Hydrophobie und die Korrosionsbeständigkeit des Beschichtungssystems verbessert. Der Hydrolysealkohol wird nicht aus den Systemen entfernt.

US 5,206,285 beschreibt die Herstellung und Anwendung von wasserbasierenden Additionsprodukten aus einem Epoxy- und einem Aminosilan. Die wässrigen Silansysteme sind nicht lösungsmittelfrei. Sie werden zur Metallbeschichtung eingesetzt und sollen die Korrosionsbeständigkeit verbessern.

In EP 1 760 128 wird eine wässrige zweikomponentige Haftvermittlerzusammensetzung sowie deren Verwendung zum Verkleben oder Abdichten beansprucht. Eine Komponente des Haftvermittlers kann ein Bis-Silylaminosilan enthalten.

DE 10 2004 037 045 betrifft wässrige Silan-Nanokomposite, die aus Glycidyloxypropylalkoxysilanen und wässrigen Kieselsolen in Anwesenheit eines Katalysators hergestellt werden. Die wässrigen Systeme sind praktisch lösungsmittelfrei und sind für Metallbeschichtungen geeignet. Nachteilig sind die hohen Vernetzungstemperaturen von 200 °C.

US 6,468,336 beschreibt die Formulierung und Anwendung einer Korrosionsschutzbeschichtung für Stahl. Die wasserbasierte Formulierung enthält als Bindemittel Wasserglas und als Pigmente, Zink, Eisenschichtsilikate sowie weitere Füllstoffe. Die beschriebenen Formulierungen sollen in Schichtdicken von 15 bis 25 $\mu$m einen ausgezeichneten

Korrosionsschutz erzielen.

EP 1 191 075 lehrt ein wasserbasiertes Zwei-Komponentensystem für Korrosionsschutzbeschichtungen auf Stahl. Die erste Komponente enthält Wasser, ein Aminoalkyltrialkoxysilan, eine Säure, ein Epoxysilan sowie leitfähige Pigmente. Die zweite Komponente besteht aus Zinkpulver. Die fertige Mischung soll eine Verarbeitungszeit von 16 Stunden ermöglichen. Der Alkohol aus der Hydrolyse des Silans wurde nicht entfernt und das wässrige System wurde so aufgetragen, dass eine Trockenschichtdicke von 25 μm resultierte. Die beschichteten Bleche zeigten nach 7 Monaten Außenbewitterung keine Korrosion.

In WO 2000/46311 wird die Behandlung von Metallsubstraten mit einer Formulierung aus einem Ureidosilan, einem Multisilylsilan sowie einem Lösungsmittel beschrieben. Die Silane werden zuerst teilweise hydrolysiert und anschließend formuliert. Der Hydrolysealkohol wird nicht entfernt und die Formulierung wird ohne Pigmente eingesetzt.

In WO 2002/22745 wird ein lösungsmittelfreier Korrosionsschutzprimer beansprucht. Der Primer setzt sich aus einem stabilisierten Kieselsol, einem Schichtsilikat, einem kalzinierten Aluminiumschichtsilikat sowie Zinkstaub zusammen. Die Trockenschichtdicke der Beschichtung beträgt ca. 15 bis 25 μm. Die Abriebsbeständigkeit und die Verarbeitungszeit wurden bestimmt.

WO 2003/022940 beschreibt ein Korrosionsschutzsystem, das aus einem wässrigen Kieselsol, optional einem organischen Harz, Zinkstaub sowie weiteren Additiven besteht. Die Systeme werden durch die Abriebsfestigkeit und die Bleistifthärte charakterisiert.

WO 2006/079516 betrifft ein wässriges Binde- bzw. Beschichtungsmittel, das auf einem Aminoalkylsilan bzw. einem Formylaminopropyltrialkoxysilan sowie einem Epoxysilan beruht.

In EP 1 191 075 B1 beruht das Bindemittel auf einem Aminoalkylalkoxysilan und einem Epoxy-funktionellen Alkoxysilan und einer wohl definierten Herstellungsweise.

Das dort offenbarte Beschichtungsmittel wurde auf der Basis des Bindemittels unter Zusatz von Pigmenten, u. a. leitfähigen Pigmenten, und Additiven formuliert.

WO 99/14277 beschreibt eine wässrige Primerzusammensetzung, die aus einem reaktiven Harz (Dispersion), einem organofunktionellen Silan (Amino- oder Epoxysilan, keine Bis-Silylsilane) und einem Härtungsreagenz besteht. Verklebungen von Metallsubstraten, die mit diesem Primer behandelt wurden, zeigen in Kombination mit einem Epoxyharz im Scherversuch sehr gute Festigkeiten.

In WO 2008/133916 wird eine Methode zur Behandlung von Metalloberflächen beschrieben. Die Methode beinhaltet die Behandlung mit einer wässrigen Formulierung, die aus hydrolysierten/kondensierten Silanen besteht. Die eingesetzten Silane können Aminosilane sein, die Hydroxylgruppen enthalten. Die so hergestellten Beschichtungssysteme sind nicht lösungsmittelfrei. Die behandelten Metallsubstrate wurden lackiert und zeigen im Vergleich zur Standardbehandlung eine geringere Unterwanderung am Ritz.

US 6,929,826 beansprucht eine Methode zur Oberflächenbehandlung von Metallen. Die Methode beinhaltet die Behandlung mit einer Formulierung, die ein Epoxysilan und ein Tetraalkoxysilan enthält.

In WO 2006/137663 wird eine Zusammensetzung beschrieben, die aus einem Aminosilan und einem Epoxysilan besteht. Darüber hinaus enthält die Formulierung eine Magnesium- und Vanadiumverbindung sowie eine Säure. Die Herstellung erfolgt in einem Wasser/Alkohol-Gemisch. Die mit dieser Formulierung behandelten Metallsubstrate zeigen eine gute Korrosionsresistenz und eine gute Haftung zu organischen Beschichtungen. Die Systeme sind nicht lösungsmittelfrei.

WO 2009/059798 offenbart eine Formulierung und Beschichtung eines Metalls. Die Formulierung besteht aus Tetraethoxysilan, Vinyltrimethoxysilan, Phenyltriethoxysilan, sowie Propyltrimethoxysilan. Darüber hinaus werden weitere Komponenten wie Alkohole, Katalysatoren, Kieselsole und Additive beansprucht. Die erfindungsgemäßen Beschichtungen müssen zur Härtung erwärmt werden. Die Formulierung soll Metallsubstrate vor Korrosion schützen.

EP 0 274 428 lehrt eine Zusammensetzung, die aus einem Alkyltrialkoxysilan, einem Vinyltrialkoxysilan und/oder weiteren Silanen wie einem Epoxysilan, einem organischen Lösungsmittel sowie einem Aluminiumsol besteht.

WO 2009/030538 lehrt wässrige Zusammensetzungen auf der Basis von Bisalkoxyalkylsilylaminen, die im Wesentlichen frei von organischen Lösemitteln sind und auch beim Vernetzen keinen Alkohol freisetzen. Ferner können solche Systeme auf weiteren Organosilanen. wie 3-Glycidyloxypropyltrialkoxysilanen sowie Alkylalkoxysilanen beruhen. Auch können die Systeme Füllstoffe, wie Kieselsäure, Titandioxid und Aluminiumoxid, sowie Farbpigmente enthalten. Darüber hinaus wird das Verfahren zur Herstellung sowie die Anwendung - unter anderem auch als Korrosionsschutzbeschichtung - offenbart.

Silane und wässrige Silansysteme können bei entsprechender Formulierung eine Beschichtung auf vielen Substraten ausbilden. Diese Beschichtungen können keinen aktiven Korrosionsschutz, sondern nur einen passiven Korrosionsschicht ausbilden sowie als Bindemittel bzw. Vernetzer in Beschichtungszusammensetzungen (Coatings) wirken. So können Bindemittel auch als Vernetzer gesehen werden. Ein aktiver Korrosionsschutz kann durch Korrosionsinhibitoren erzielt werden. Damit solche Formulierungen, insbesondere umweltfreundliche wässrige Formulierungen, hergestellt werden können, müssen das Bindemittel und die Korrosionsschutzzusätze kompatibel sein, um eine möglichst stabile und wirkungsvolle Formulierung bereitstellen und im industriellen Maßstab in einem angemessen Zeitrahmen verarbeiten zu können.

Somit lag der vorliegenden Erfindung die Aufgabe zugrunde, eine weitere wässrige und weitgehend VOC-freie Korrosionsschutzzusammensetzung auf Basis von so genannten Bis-Aminosilan-Cokondensaten als Bindemittel zur Verfügung zu stellen, wobei diese mit partikulären Zusätzen sowie gegebenenfalls weiteren Additiven im Wesentlichen verträglich und als solche zumindest mehrere Stunden bis Wochen bis zur Applikation lagerstabil sind. Darüber hinaus war es ein besonderes Anliegen, dass solche Formulierungen bei Raumtemperatur gehärtet werden können sowie auf Metallsubstraten eine gute Haftung und einen Korrosionsschutz erzielen. Weiterhin wird angestrebt, dass auf dieser Grundlage erhältliche Korrosionsschutzbeschichtungen in unterschiedlicher Schichtdicke aufgetragen werden können und nach der Härtung gut überlackierbar sind, d. h. eine gute Haftung zu Beschichtungen, insbesondere zu organischen (Lack-)Beschichtungen erzielen.

Die Aufgabe wurde erfindungsgemäß entsprechend den Merkmalen in den Patentansprüchen gelöst.

So wurde überraschend gefunden, dass man auf der Basis von praktisch vollständig hydrolysierten Cokondensaten eines epoxyalkylfunktionellen Alkoxysilans vgl. nachstehende Formel I, mit mindestens einem bis-aminoalkylfunktionellen Alkoxysilan, vgl. auch nachstehende Formeln II und IIa, sowie optional weiteren organofunktionellen Alkoxysilanen bzw. Kieselsol-Systemen spezielle wässrige Bindemittel für Korrosionsschutzformulierungen mit einem definiertem pH-Wert und einem definierten Trockenrückstand herstellen kann, die weitgehend VOC-frei sind, an der Luft bei niedrigen Temperaturen, d. h. bevorzugt bei Raumtemperatur, vorzugsweise bei 16 bis 26 °C, insbesondere bei 20 °C, härten und mit Zusätzen aus der Reihe partikulärer Metalle, Metalllegierungen und/oder Metallverbindungen, u. a. Metalloxide oder Metallsalze, sowie optional weiterer Additive vorteilhaft verträglich, lagerstabil und applikationsfähig sind. Darüber hinaus kann man unter Einsatz vorliegender Zusammensetzungen vorteilhaft dünne Schichten auf Metall erzeugen, auf die man weitere Lackschichten aufbringen und gleichzeitig eine gute Haftung zum Primer bzw. zum Metall erzielen kann.

Bindemittel sind in der Regel Flüssigkeiten, die Feststoffe mit einem feinen Zerteilungsgrad verkleben, ferner in einer Zubereitung vernetzend wirken können und eine Haftung zum Untergrund ermöglichen. Damit eine Formulierung aus einem Bindemittel und einem partikulären Zusatzstoff hergestellt werden kann, muss das Bindemittel mit dem Zusatzstoff verträglich sein, d. h. es muss den Zusatzstoff benetzen. Dadurch kann der Zusatzstoff im Bindemittel verteilt und die positiven Eigenschaften des Systems erhalten werden. Formulierungen aus einem Bindemittel und Zusatzstoff können beispielsweise im Korrosionsschutz eine breite Anwendung finden. Besonders vorteilhaft sind dabei wässrige Systeme, da sie im Wesentlichen keine organischen Lösungsmittel oder andere umweltgefährdende Stoffe enthalten. Wässrige Sol-Gel-Systeme sind nicht nur umweltfreundlich, sondern auch sehr variabel und sehr vielseitig einsetzbar. Neue vorliegende Bindemittel auf Basis wässriger Sol-Gel-Systeme können nicht nur bei niedrigen Temperaturen härten, sondern sie verbessern auch die Haftung von weiteren Beschichtungen auf diesen Systemen, d. h. sie sind gut überlackierbar.

Das Anwendungsspektrum der vorliegenden wässrigen Bindemittel ist sehr vielseitig. Sie können als Basis für diverse Formulierungen insbesondere als Bindemittel in Kombination mit partikulären Metallen und/ oder partikulären Metallverbindungen sowie gegebenenfalls weiteren Additiven eingesetzt werden. Soll das System hydrophobe Eigenschaften aufweisen, dann kann neben dem epoxyfunktionellen Alkoxysilan und den bis-aminofunktionellen Alkoxysilanen auch ein Alkyltrialkoxysilan als weitere Komponente eingesetzt werden. Sind spezielle Eigenschaften des wässrigen Bindemittelsystems oder spezielle Funktionen zur Ankopplung an ein organisches Beschichtungssystem erforderlich, dann können auch weitere organofunktionelle Silane oder auch Tetraalkoxysilane neben den epoxyfunktionellen Alkoxysilanen und den bis-aminofunktionellen Alkoxysilanen eingesetzt werden. Die Verhältnisse der Silankomponenten können vorteilhaft so eingestellt werden, dass das vollständig hydrolysierte und kondensierte Produkt in der wässrigen Lösung stabil ist und trotzdem bei niedriger Temperatur auf dem Substrat bzw. als Bindemittel in der Formulierung härtet. Aber nicht nur das Verhältnis, sondern auch die Reihenfolge der Dosierung hat einen wesentlichen Einfluss auf die Produkteigenschaften. Der Hydrolysealkohol wird vorteilhaft während der Herstellung des Bindemittels aus dem Reaktionssystem entfernt, sodass ein weitgehend VOCfreies wässriges Produkt bereit gestellt werden kann.

Auch wurde gefunden, je geringer der Anteil des epoxyfunktionellen Alkoxysilans, im Bindemittel ist und je höher der Anteil des bis-aminofunktionellen Alkoxysilans, vgl. auch Formel II, desto geringer können die Einwaagen an Silan in der wässrigen Formulierung gewählt werden. Der Wirkstoff des Bindemittels besteht in der Regel aus vollständig hydrolysierten und zumindest partiell kondensierten bzw. cokondensierten Silanen. Um lagerstabile Silansysteme zu erhalten, darf der Feststoffgehalt des reinen epoxyfunktionellen Alkoxysilans im wässrigen Sol-Gel System vorteilhaft bis zu 70 Gew.-% betragen, während der Feststoffgehalt des reinen bis-aminofunktionellen Alkoxysilans nur maximal ca. 10 Gew.-% betragen sollte, ohne fest zu werden. Der Trockenrückstand (hier auch als Feststoffgehalte bezeichnet) der Kondensate bzw. Cokondensate im Bindemittel liegt bevorzugt im Bereich von 1 bis 50 Gew.-%, besonders bevorzugt zwischen 3 und 45 Gew.-% und ganz besonders bevorzugt zwischen 5 und 35 Gew.-%.

Gegenstand der vorliegenden Erfindung ist somit eine Zusammensetzung umfassend

- ein Bindemittel enthaltend mindestens ein Cokondensat auf der Basis von einem ω-Glycidyloxyalkylalkoxysilan der Formel I

$$X-Si(R^2)_x(OR^1)_{3-x} \qquad (I),$$

worin X für eine 2-(3,4-Epoxycyclohexyl)ethyl-, 1-Glycidyloxymethyl-, 2-Glycidyloxyethyl-, 3-Glycidyloxypropyl- oder 3-Glycidyloxyisobutyl-Gruppe steht, $R^1$ sowie $R^2$ unabhängig von einander eine lineare oder verzweigte Alkyl-Gruppe mit 1 bis 4 C-Atomen darstellen, und x gleich 0 oder 1 ist,
und mindestens ein Bis(alkoxysilylalkyl)amin der allgemeinen Formel II

$$(OR^1)_3Si-A-Si(OR^1)3 \qquad (II),$$

worin die Gruppen $R^1$ gleich oder verschieden sind und $R^1$ eine lineare oder verzweigte Alkyl-Gruppe mit 1 bis 4 C-Atomen darstellt und A für eine bis-aminofunktionelle Gruppe der Formel IIa steht

$$-(CH_2)_i -[NH(CH_2)_f]_gNH[(CH_2)_{f*}NH]_{g*}-(CH_2)_{i*}- \qquad (IIa),$$

worin i, i*, f, f*, g oder g* gleich oder verschieden sind, mit i und/ oder i* = 1, 2, 3 oder 4, f und/ oder f* = 1 oder 2, g und/ oder g* = 0 oder 1, vorzugsweise mit i und i* gleich 3 sowie g und g* gleich 0 und $R^1$ steht für Methyl und/ oder Ethyl,
sowie optional mindestens eine weitere Siliciumverbindung aus der Reihe Tetraalkoxysilan, Alkylalkoxysilan, Mercaptoalkylalkoxysilan, Aminoalkylalkoxysilan, Carboxyalkylalkoxysilan, Ureidoalkylalkoxysilan, Thiocyanatoalkylalkoxysilan und der Kieselsole,

- Wasser,
- Alkohol in eine Menge von weniger als 3 Gew.-%, vorzugsweise 0,01 bis 2,5 Gew.-%, insbesondere 0,1 bis 2,2 Gew.-%, bezogen auf die Zusammensetzung,
- mindestens einen Zusatz aus der Reihe partikulärer Metalle und/oder Metalllegierungen, wobei der Zusatz aus der Reihe der partikulären Metalle und/oder Metalllegierungen ausgewählt ist aus der Reihe Zinkpulver, Zinklamellen, Zinkstaub, Pulver oder Lamellen oder Staub aus Zinklegierungen, Zinkwismutlegierungen, und
- optional mindestens ein Additiv,

wobei der pH-Wert in der Zusammensetzung 1 bis 14, vorzugsweise 2 bis 13, insbesondere 3,0; 3,5; 4,0; 4,5; 5,0; 5,5; 6,0; 6,5; 7,0; 7,5; 8,0 einschließlich aller positiven Zahlen von $\geq$ 2,5 bis $\leq$ 12, beträgt und
der Trockenrückstand des Bindemittels 1 bis 50 Gew.-%, vorzugsweise 5 bis 40 Gew.-%, besonders bevorzugt 8 bis 35 Gew.-%, insbesondere 10 bis 25 Gew.-%, ferner 2, 3, 4, 6, 7, 9, 11, 12, 13, 14, 15, 16, 17, 18, 19, 20, 21, 22, 23, 24 Gew.-%, bezogen auf das eingesetzte Bindemittel, beträgt.

Das Bindemittel für die erfindungsgemäße Zusammensetzung kann man vorteilhaft herstellen, indem man zunächst Wasser in einem molaren Überschuss, bezogen auf die eingesetzten Silane gemäß der Formeln I und II sowie ggf. der zuvor genannten Siliciumverbindungen, vorlegt und unter Zusatz einer organischen oder anorganischen Säure auf einen sauren pH-Wert einstellt und optional dabei ein Kieselsol zusetzt,
ein ω-Glycidyloxyalkylalkoxysilan der Formel I zudosiert und erwärmt,
optional Säure nachdosiert,
und mindestens ein Bis(alkoxysilylalkyl)amin der allgemeinen Formel II sowie optional mindestens eine weitere Siliciumverbindung aus der Reihe Tetraalkoxysilan, Alkylalkoxysilan, Aminoalkylalkoxysilan, Ureidoalkylalkoxysilan, Carboxyalkylalkoxysilan und Thiocyanatoalkylalkoxysilan zudosiert
und reagieren lässt,
anschließend den dabei entstandenen Hydrolysealkohol unter vermindertem Druck zumindest anteilig aus dem Reaktionsgemisch entfernt,
das so erhaltene Bindemittel optional mit Wasser und/ oder einer wässrigen Säure verdünnt und anschließend filtriert, wobei der Trockenrückstand des Bindemittels 1 bis 50 Gew.-%, vorzugsweise 5 bis 40 Gew.-%, besonders bevorzugt 8 bis 35 Gew.-%, insbesondere 10 bis 25 Gew.-%, bezogen auf das eingesetzte Bindemittel, beträgt.

Die erfindungsgemäße Zusammensetzung kann vorteilhaft als Einkomponentensystem vorliegen und verwendet werden.

Man kann aber auch das zuvor beschriebene Bindemittel und mindestens einen der genannten Zusätze als Zweikomponentensystem verwenden, indem man die Komponenten vor der Applikation mischt und so eine entsprechende Zusammensetzung erhält. Dabei kann man auch weitere Additive zusetzen.

Vorteilhaft weist eine erfindungsgemäße Zusammensetzung einen Trockenrückstand (Feststoffgehalt) von 1 bis 50 Gew.-%, vorzugsweise 3 bis 45 Gew.-%, besonders bevorzugt 3 bis 35 Gew.-%, bezogen auf die Zusammensetzung, auf.

Ferner ist eine erfindungsgemäße Zusammensetzung durch eine Gehalt an partikulären Metalle und/ oder Metallverbindungen in der Zusammensetzung 1 bis 95 Gew.-%, vorzugsweise 3 bis 90 Gew.-%, besonders bevorzugt 5 bis 85 Gew.-%, ganz besonders bevorzugt 10 bis 80 Gew.-%, gekennzeichnet.

Dabei weisen die partikulären Zusätze vorteilhaft eine Partikelgröße von 5 nm bis 50 $\mu$m, vorzugsweise von 10 nm bis 40 $\mu$m, besonders bevorzugt von 15 nm bis 30 $\mu$m, auf. Die Bestimmung der Partikelgröße kann z. B. mittels CAMSIZER, HORIBA LA-30, LB-550 sowie LA-950 von Retsch Technology erfolgen. So kann die Partikelgröße nass ab 1 nm und trocken ab 100 nm bestimmt werden.

Insbesondere die leitfähigen Zusätze schützen vor Korrosion, wenn sie in ausreichender Konzentration eingesetzt werden und mit dem Metallsubstrat in Kontakt sind. So können Metallsubstrate, die mit einer Beschichtung aus partikulären Metallen gegen Korrosion geschützt sind, vorteilhaft geschweißt werden.

Darüber hinaus können erfindungsgemäße Zusammensetzungen zusätzlich Additive enthalten, vorteilhaft ausgewählt aus der Reihe der Entschäumer, Verdickungsmittel, Rheologiehilfsmittel, Dispersionshilfsmittel, Antiabsetzmittel, Rostinhibitoren, Benetzungsmittel, organischen Pigmente, Polymere bzw. Polymerdispersionen sowie der Katalysatoren für die Kondensation und Härtung. So können als Polymere beispielsweise, aber nicht ausschließlich, Acrylatdispersionen, PU-Dispersionen, Epoxyharzdispersionen, funktionalisierte Polyester, wasserlösliche Polymere, wie zum Beispiel PVA, Polyacrylsäure, - um nur einige geeignete Polymere zu nennen - eingesetzt werden. Ferner können als Additive bzw. Polymere bzw. Cobindemittel organische Filmbildner sowie Haftvermittler auf Basis von Acrylsäureestern, Acryl-Polyester-Polyurethan-Copolymerisaten, Ethylen-Acryl-Copolymerisaten, Polyesterharze mit freien Carboxylgruppen eingesetzt werden.

So können erfindungsgemäße Zusammensetzungen durch einen Gehalt an Additiven von jeweils 0 bis 5 Gew.-%, insbesondere an Verdickungsmittel von 0 bis 5 Gew.-% und/ oder an Antiabsetzmittel von 0 bis 5 Gew.-% und/ oder an Benetzungsmittel von 0 bis 3 Gew.-% und/oder an Korrosionsinhibitor von 0 bis 1 Gew.-%, jeweils bezogen auf die Zusammensetzung, wobei die Summe aller in der Zusammensetzung befindlichen Bestandteile 100 Gew.-% ergeben, gekennzeichnet sein.

Typische Verdickungsmittel sind z. B. Polyacrylsäurepolymere, Celluloseether, Polyurethane, Acrylatpolymere, Hydroxyethylcellulose, die in Konzentrationen von 0,005 bis 4,0 Gew.-%, bevorzugt von 0,008 bis 3,0 Gew.-% und ganz besonders bevorzugt von 0,01 bis 2,0 Gew.-% eingesetzt werden. Beispiele für Verdickungsmittel bzw. Rheologiemodifizierer sind u. a. Coapur 6050 sowie Coapur XS 71 der Firma Coatex.

Beispiele für Antiabsetzmittel sind u. a. Laponite, Bentonite, Glycerolstearate, Polyamide, Xanthan, Polyethylenwachse, modifizierte und unmodifizierte pyrogene Kieselsäure, beispielsweise Aerosil® R 812 S oder Aerosil® R 805, die ebenfalls in Konzentrationen bis 4 Gew.-%, bevorzugt 0,01 bis 3 Gew.-%, insbesondere von 0,1 bis 2 Gew.-% eingesetzt werden.

Als typische Benetzungsmittel sind z. B. BYK 348 sowie ethoxylierte Alkohole zu nennen, die in Konzentrationen bis 3 Gew.-%, bevorzugt von 0,01 bis 2,5 Gew.-% oder ganz besonders bevorzugt von 0,1 bis 1,5 Gew.-% eingesetzt werden.

Als typische Korrosionsinhibitoren sind Molybdate, Phosphate, Chromate, Borate sowie insbesondere organische Korrosionsinhibitoren. Die organischen Korrosionsinhibitoren werden dabei in geringeren Konzentrationen eingesetzt, geeigneterweise bis 1,0 Gew.-%, bevorzugt 0,8 Gew.-%, besonders bevorzugt 0,5 Gew.-%, insbesondere von 0,00001 bis 0,1 Gew.-% , jeweils bezogen auf die Zusammensetzung, wobei die Summe aller in der Zusammensetzung befindlichen Bestandteile 100 Gew.-% ergeben.

Mögliche Katalysatoren für die Kondensation und Härtung sind z. B. TYZOR LA (DuPont), Titanacetylacetonat, Tetrakis(triethanolamin)zirkonat.

Ferner ist Gegenstand der vorliegenden Erfindung ein Verfahren zur Herstellung einer erfindungsgemäßen Zusammensetzung, das dadurch gekennzeichnet ist, dass man zunächst ein Bindemittel enthaltend mindestens ein Cokondensat auf der Basis von einem $\omega$-Glycidyloxyalkylalkoxysilan der Formel I

$$X\text{-}Si(R^2)_x(OR^1)_{3-x} \qquad (I),$$

worin X für eine 2-(3,4-Epoxycyclohexyl)ethyl-, 1-Glycidyloxymethyl-, 2-Glycidyloxyethyl-, 3-Glycidyloxypropyl- oder 3-Glycidyloxyisobutyl-Gruppe steht, $R^1$ sowie $R^2$ unabhängig von einander eine lineare oder verzweigte Alkyl-Gruppe mit 1 bis 4 C-Atomen darstellen, und x gleich 0 oder 1 ist,
und
mindestens einem Bis(alkoxysilylalkyl)amin der allgemeinen Formel II

$$(OR^1)_3Si \text{ - A - } Si\,(OR^1)_3 \qquad (II),$$

worin die Gruppen $R^1$ gleich oder verschieden sind und $R^1$ eine lineare oder verzweigte Alkyl-Gruppe mit 1 bis 4 C-Atomen darstellt und A für eine bis-aminofunktionelle Gruppe der Formel IIa steht

$$-(CH_2)_i -[NH(CH_2)_f]_g NH[(CH_2)_{f*}NH]_{g*}-(CH_2)_{i*}- \qquad (IIa),$$

worin i, i*, f, f*, g oder g* gleich oder verschieden sind, mit i und/ oder i* = 1, 2, 3 oder 4, f und/ oder f* = 1 oder 2, g und/ oder g* = 0 oder 1, vorzugsweise mit i und i* gleich 3 sowie g und g* gleich 0 und $R^1$ steht für Methyl und/ oder Ethyl, sowie

optional mindestens einer weiteren Siliciumverbindung aus der Reihe Tetraalkoxysilan, Alkylalkoxysilan, Mercaptoalkylalkoxysilan, Carboxyalkylalkoxysilan, Aminoalkylalkoxysilan, Ureidoalkylalkoxysilan, Thiocyanatoalkylalkoxysilan und der Kieselsole herstellt, indem man Wasser in einem molaren Überschuss, bezogen auf die eingesetzten Silane gemäß der Formeln I, II sowie ggf. der zuvor genannten Siliciumverbindungen, vorlegt und unter Zusatz einer organischen oder anorganischen Säure auf einen sauren pH-Wert einstellt und optional dabei ein Kieselsol unter Rühren zusetzt,

ein ω-Glycidyloxyalkylalkoxysilan der Formel I zudosiert und erwärmt,

optional Säure nachdosiert,

und mindestens ein Bis(alkoxysilylalkyl)amin der allgemeinen Formel II sowie optional mindestens eine weitere Siliciumverbindung aus der Reihe Tetraalkoxysilan, Alkylalkoxysilan, Mercaptoalkylalkoxysilan, Aminoalkylalkoxysilan, Carboxyalkylalkoxysilan, Ureidoalkylalkoxysilan und Thiocyanatoalkylalkoxysilan zudosiert und reagieren lässt,

anschließend den dabei entstandenen Hydrolysealkohol unter vermindertem Druck zumindest anteilig aus dem Reaktionsgemisch entfernt,

das so erhaltene Bindemittel optional mit Wasser und/ oder einer wässriger Säure verdünnt, anschließend filtriert und

in das so erhaltenen Bindemittel mindestens einen Zusatz aus der Reihe partikulärer Metalle und/oder Metalllegierungen dispergiert sowie optional mindestens ein Additiv einrührt.

Dabei setzt man für die Zubereitung des Bindemittels bevorzugt das ω-Glycidyloxyalkylalkoxysilan der Formel I in einem molaren Verhältnis zum Bis(alkoxy-silylalkyl)amin der allgemeinen Formel II von 0,1 zu 99,9 bis 99 zu 1, vorzugsweise von 1 zu 99 bis 95 zu 5, besonders bevorzugt bis 80 zu 20, ganz besonders bevorzugt bis 70 zu 30, ein, insbesondere setzt man das ω-Glycidyloxyalkylalkoxysilan im Bindemittel mit 0,001 bis 42 Mol-%, bevorzugt von 0,01 und 30 Mol-%, besonders bevorzugt von 0,1 bis 15 Mol-%, ganz besonderes bevorzugt von 0,2 und 1,5 Mol-% ein.

Insbesondere geht man beim erfindungsgemäßen Verfahren so vor, dass man Wasser in einem molaren Überschuss, bezogen auf die eingesetzten Silane gemäß der Formeln I und II sowie optional der zuvor genannten Siliciumverbindungen, geeigneterweise 2 bis 1000 Mol Wasser, vorzugsweise 5 bis 500 Mol, insbesondere 10 bis 100 Mol Wasser pro Mol der vorliegenden Si-gebundenen Alkoxygruppen der eingesetzten Silane, unter Schutzgas vorlegt. Bei der Umsetzung verwendet man als Schutzgas in der Regel Stickstoff oder Argon.

Weiter kann man bei der Durchführung des erfindungsgemäßen Verfahrens eine organischen oder anorganischen Säure verwenden, wobei diese vorteilhaft ausgewählt ist aus der Reihe Ameisensäure, Essigsäure, Propionsäure, Salzsäure, Salpetersäure, Schwefelsäure, Phosphorsäure. Besagte Säuren können in wässriger aber auch in konzentrierter Form eingesetzt werden. Insbesondere kann man mit einer der besagten Säuren, vorzugsweise mit Ameisensäure, den pH-Wert der Reaktions- bzw. Produktmischungen, insbesondere des Bindemittels, während und/oder nach der Umsetzung auf 1 bis 6,5, vorzugsweise 2 bis 6, insbesondere auf 2,5; 3; 3,5; 4; 4,5; 5 sowie 5,5 vorteilhaft einstellen.

Überraschender Weise wurde gefunden, dass man einige der erfindungsgemäß eingesetzten Bindemittel auch im neutralen sowie alkalischen Bereich stabilisieren kann. So kann man beispielsweise durch Zusatz einer wässrigen Alkalilauge oder einer geeigneten Base den pH-Wert vorteilhaft neutral sowie alkalisch, insbesondere auf 7; 7,5; 8; 8,5; 9; 9,5; 10; 10,5; 11; 11,5; 12; 12,5; 13 sowie 14, einstellen, vgl. die Beispiele. Weitere Basen neben Alkalilaugen, wie wässrige NaOH oder KOH, die vorteilhaft eingesetzt werden können, sind vorzugsweise N,N-Dimethyl-ethanolamin oder auch das TYZOR TEAZ [Tetrakis(triethanolamin)-Zirkonat].

Weiter setzt man beim erfindungsgemäßen Verfahren als ω-Glycidyloxyalkylalkoxysilan der Formel I bevorzugt 3-Glycidyloxypropyltrimethoxysilan und/ oder 3-Glycidyloxypropyltriethoxysilan ein und dosiert dies in das vor erhaltene saure wässrige Gemisch und erwärmt das Gemisch über 0,1 bis 3 Stunden, vorzugsweise 0,5 bis 1,5 bzw. 2 Stunden, unter Rühren bzw. Mischen auf eine Temperatur von 50 bis 90 °C, vorzugsweise 55 bis 70 °C, insbesondere 60 bis 65 °C.

Anschließend dosiert man zu dem erwärmten, sauren und ω-Glycidyloxyalkylalkoxysilan enthaltenden Gemisch bevorzugt das Bis(trimethoxysilylpropyl)amin und/ oder Bis(triethoxysilylpropyl)amin. Zusätzlich kann man, beispielsweise gemeinsam mit dem Bis(alkoxysilylalkyl)amin, optional als weitere Siliciumverbindung ein Tetraalkoxysilan, vorzugsweise Tetramethoxysilan, Tetraethoxysilan, ein Alkylalkoxysilan, vorzugsweise C1-C16-Alkylalkoxysilane, insbesondere Methyltrimethoxysilan, Methyltriethoxysilan, n-Propyltrimethoxysilan (PTMO), n-Propyltriethoxysilan (PTEO), i-Butyltrimethoxysilan (IBTMO), i-Butyltriethoxysilan (IBTEO), Octyltrimethoxysilan (OCTMO), Octyltriethoxysilan (OCTEO), Mercaptoalkylalkoxysilan, vorzugsweise 3-Mercaptopropyltrimethoxysilan (MTMO), Mercaptopropyltrimethoxysilan (MTEO), Aminoalkylalkoxysilan, vorzugsweise 3-Aminopropyltrimethoxysilan (AMMO), 3-Aminopropyltriethoxysilan (AMEO), N-(2-Aminoethyl)-3-aminopropyltrimethoxysilan (DAMO), N-(2-Aminoethyl)-3-aminopropyltriethoxysilan, N, N'-Diaminoethyl-3-aminopropyltrimethoxysilan (TriAMO), N, N'-Diaminoethyl-3-aminopropyltriethoxysilan, ein Ureidoalkylalkoxysilan, vorzugsweise 3-Ureidopropyltrimethoxysilan, 3-Ureidopropyltriethoxysilan, und/ oder ein Thiocyanatoalkylalkoxysilan, vorzugsweise 3-Thiocyanatopropyltrimethoxysilan, 3-Thiocyanatopropyltrimethoxysilan, Carboxyalkyltrialkoxysilane, vorzugsweise 4-(Trimethoxysilyl)butansäure, 5-(Trimethoxysilyl)pentansäure, 5-(Triethoxysilyl)pentansäure, einsetzen. Dabei erfolgt das Zudosieren der zuvor genannten Silane vorteilhaft bei einem pH-Wert von 2 bis 6, vorzugsweise 3 bis 5, und unter Rühren bei 50 bis 90 °C, vorzugsweise 60 bis 65 °C. Anschließend lässt man das Gemisch vorteilhaft noch über 0,3 bis 6 Stunden, vorzugsweise 2 bis 4 Stunden reagieren, wobei man weiter Rühren kann; d. h. die eingesetzten Alkoxysilane hydrolysieren dabei im Wesentlichen vollständig hydrolysiert und kondensiert bzw. cokondensiert.

Aus dem so erhaltenen Produktgemisch kann anschließend den bei der Umsetzung entstandenen Hydrolysealkohol mit in der Regel Anteilen an Wasser unter vermindertem Druck (Vakuumdestillation) zumindest anteilig aus dem Reaktionsgemisch entfernt werden.

Das so vorliegende Bindemittel kann optional mit Wasser und/oder einer wässriger Säure oder wässriger Base verdünnt werden, beispielsweise um den pH-Wert, den Gehalt an Trockenrückstand und/oder die Viskosität einzustellen. Anschließend wird das Bindemittel geeigneterweise filtriert, wobei man vorzugsweise eine feinporige Filterplatte verwendet, um gröbere bei der Umsetzung gegebenenfalls entstandene Aggregate abzutrennen. Ein so erhältliches Bindemittel besitzt bei Raumtemperatur in der Regel ölartiger Konsistenz, ist leicht trübe bis klar und von gelblich bis farblos. In das so erhaltenen Bindemittel kann nun mindestens einen Zusatz aus der Reihe der bereits oben offenbarten partikulären Metalle und/oder Metalllegierungen dispergiert sowie optional mindestens ein Additiv, wie sie ebenfalls oben dargelegt sind, einrührt werden.

Ferner wird erfindungsgemäß eine organischen oder anorganischen Säure ausgewählt aus der Reihe Ameisensäure, Essigsäure, Propionsäure, Salzsäure, Salpetersäure, Schwefelsäure, Phosphorsäure sowie eine wässrige Base ausgewählt aus der Reihe Natronlauge, Kalilauge oder auch "TYZOR TEAZ" [Tetrakis(triethanolamin)-Zirkonat] oder N,N-Dimethylethanolamin oder andere Basen bevorzugt eingesetzt, wobei man den pH-Wert während und/oder nach der Umsetzung im Bindemittel und/oder nach Formulierung in der Zusammensetzung auf 1 bis 14, vorzugsweise 2 bis 12, besonders bevorzugt 2,5 bis 9, ganz besonders bevorzugt 3 bis 8, insbesondere auf 3,5; 4; 4,5; 5; 5,5; 6; 6,5; 7; 7,5; 8 sowie 8,5 einstellt, wobei auch der Zusatz mindestens eines der bereits oben genannten partikulären Metalle, Metalllegierungen und/ oder Metallverbindungen zum Bindemittel zu einer Veränderung des pH-Werts führen kann, insbesondere der Zusatz von Zink, Zinkoxid, Zinklegierungen, Magnesium, Aluminium, Magnesiumlegierungen, Aluminiumlegierungen oder einem Eisenglimmer, wie Miox Micron, zu einem sauer eingestellten Bindemittel.

Eine erfindungsgemäße Zusammensetzung kann in entsprechenden und dem Fachmann an sich bekannten Mischern bzw. Mischaggregaten hergestellt werden. Ferner ist Gegenstand der vorliegenden Erfindung die Verwendung einer erfindungsgemäßen bzw. erfindungsgemäß erhältlichen Zusammensetzung für Beschichtungen, die bei einer Temperatur von 16 bis 26 °C an der Luft aushärten, insbesondere vorteilhaft für Beschichtungen von Metallen sowie Metalllegierungen zum Schutz vor Korrosion.

So zeichnen sich diese speziellen, erfindungsgemäße Zusammensetzungen besonders vorteilhaft durch eine vergleichweise ausgezeichnete Verarbeitungsstabilität und hervorragende Anwender- sowie umweltfreundliche Eigenschaften für Korrosionsschutzanwendungen auf Metallsubstarten aus.

Die vorliegende Erfindung wird durch die nachfolgenden Beispiele näher erläutert, ohne den Erfindungsgegenstand zu beschränken.

**Beispiele:**

**Chemikalien und verwendete Abkürzungen:**

| Handelsname | Beschreibung | Hersteller |
|---|---|---|
| Dynasylan® GLYMO | 3-Gylcidyloxypropyltrimethoxysilan (GLYMO) | Evonik Degussa |
| Dynasylan® 1122 | Bis(triethoxysilylpropyl)am in (Bis-AMEO) | Evonik Degussa |
| Dynasylan® AMEO | 3-Aminopropyltriethoxysilan (AMEO) | Evonik Degussa |
| Dynasylan® PTMO | Propyltrimethoxysilan (PTMO) | Evonik Degussa |
| Dynasylan® MTMO | 3-Mercaptopropyltrimethoxysilan | Evonik Degussa |
| Dynasylan® 2201 EQ | 3-Ureidopropyltriethoxysilan in Methanol | Evonik Degussa |
| Si 264 | 3-Isocyanatopropyltriethoxysilan | Evonik Degussa |

(fortgesetzt)

| Handelsname | Beschreibung | Hersteller |
|---|---|---|
| Dynasylan® A | Tetraethoxysilan (TEOS) | Evonik Degussa |
| Dynasylan® AR | lösemittelhaltiges Sol-Gel-System | Evonik Degussa |
| Köstrosol® 3550 | Kieselsol, 35 nm | Chemische Werke Bad Köstritz |
| Levasil® 100S/45 | Kieselsol, 100 nm | Akzo Nobel Chemicals GmbH |
| Handelsname | Beschreibung | Hersteller |
| HP 1535 | Kieselsol, 30 nm | Silco International, USA |
| HP 5540 | Kieselsol, 130 nm | Silco International, USA |

**Zusätze:**

| Zusätze | Hersteller/Lieferant |
|---|---|
| Zinkstaub 3 $\mu$m | Numinor |
| MIOX Micro 30 | Kärtner Montanindustrie |
| Bayferrox Rot 130 BM | Harold-Scholz & Co. GmbH |
| Zinkoxid Red Seal (STD) | Numinor |
| Sibelco $SiO_2$ M500 | S.C.R.-Sibelco N.V |
| Aerosil® 300 | Evonik Degussa |

**Analytische Untersuchungen:**

**pH-Wert-Bestimmung:**

Der pH-Wert der Reaktionsmischungen wurde mittels eines pH-Papier bestimmt (Spezialindikator pH 2,5 - 4,5, Merck; pH-Fix 0,0 - 6,0, Machery-Nagel) Die Bestimmung der pH-Werte in den Bindemitteln und der daraus formulierten Zusammensetzungen erfolgte alternativ mit einem pH-Meter, Metrohm 826 pH mobile. Die Formulierungen wurden vor der Messung 1 : 1 mit Wasser verdünnt.

**Bestimmung des Trockenrückstands (Feststoffgehalt):**

Der Feststoffgehalt (auch als Trockenrückstand bezeichnet) der wässrigen Silansysteme wurde wie folgt bestimmt:

1 g der Probe wurde in eine kleine Porzellanschale eingewogen und bei 105 °C bis zur Gewichtskonstanz im Trockenschrank getrocknet.

**Bestimmung des $SiO_2$-Gehalts:**

1,0 bis 5,0 g der Probe wurden in einem 400-ml-Becherglas mit einer Kjeldahl-Tablette und 20 ml Schwefelsäure versetzt und zunächst langsam erhitzt. Dabei wurde das Becherglas mit einem Uhrglas abgedeckt. Die Temperatur wurde erhöht, bis die Schwefelsäure stark rauchte und alle organischen Bestandteile zerstört waren und die Lösung klar und hell blieb. Die kalte Aufschlusslösung wurde mit dest. Wasser auf ca. 200 ml verdünnt und kurz aufgekocht (Wasser am Rande des Becherglases unter die Säure fließen lassen). Der Rückstand wurde durch einen Weißbandfilter filtriert und mit heißem Wasser gewaschen bis das Waschwasser einen pH-Wert von > 4 anzeigte (pH-Papier). Der Filter wurde in einem Platintiegel getrocknet, verascht und 1 Stunde bei 800 °C im Muffelofen geglüht. Der Rückstand wurde nach dem Wiegen mit Flusssäure abgeraucht, der Tiegel mittels eines Gebläsebrenners geglüht und gegebenenfalls nochmals bei 800 °C geglüht und nach dem Abkühlen gewogen. Die Differenz beider Wägungen entsprach

dem Gehalt an $SiO_2$.

$$\text{Auswertung: D x 100/E = Gew.-\% SiO2}$$

D = Gewichtsdifferenz vor und nach dem Abfluorieren in mg
100 = Umrechnung auf %
E = Einwaage in mg

**Bestimmung des freien Methanol- und Ethanolgehalts:**

Die Alkohol-Bestimmung wurde mittels GC durchgeführt.

Säule: RTX 200 (60 m)
Temperaturprogramm: 90-10-25-240-0
Detektor: FID
Injektionsmenge: 1,0 μl
Innerer Standard: 2-Butanol

**Beispiel 1**

In einer 2-l-Rührapparatur mit Dosiervorrichtung und Rückflusskühler wurden unter Stickstoffatmosphäre 1328,26 g Wasser und 1 g Ameisensäure (HCOOH = 85 Gew.-%) vorgelegt. Es wurden 90,0 g 3-Glycidyloxypropyltrimethoxysilan (GLYMO) zudosiert (pH nach der Zugabe bestimmt = 3,4) und auf 65 °C erhitzt und 1 Stunde gerührt. Es wurden 27,0 g Ameisensäure (HCOOH = 85 Gew.-%) zugegeben, und über die Dosiervorrichtung wurden 210,0 g Dynasylan® 1122 zudosiert. Bei einem pH-Wert von 4,94 wurde 3 Stunden bei 65 °C nachgerührt. Schließlich wurden bei ca. 130 mbar 362,93 g Alkohol/Wasser-Gemisch destillativ entfernt. Dem gelartigen Ansatz wurden 400,0 g Wasser zugefügt. Der auf Raumtemperatur abgekühlte Rückstand wurde über eine Seitz T-950 Filterplatte filtriert. Die Auswaage des Rückstandes betrug 1681,4 g.
Es wurde eine klare, gelbliche Flüssigkeit mit einem pH-Wert von 5,6 erhalten. Das Produkt ist mindestens 6 Monate lagerstabil.

Trockenrückstand: 11,82 Gew.-%
$SiO_2$-Gehalt: n. b.
Freies Methanol: 0,6 Gew.-%
Freies Ethanol: 1,5 Gew.-%

**Beispiel 2**

In einer 2-l-Rührapparatur mit Dosiervorrichtung und Rückflusskühler wurden unter Stickstoffatmosphäre 1336,0 g Wasser und 2 g Ameisensäure (HCOOH = 85 Gew.-%) vorgelegt. Es wurden 150,0 g GLYMO zudosiert (pH nach der Zugabe = 3,0) und auf 65 °C erhitzt und 1 Stunde gerührt. Es wurden 19,0 g Ameisensäure (HCOOH = 85 Gew.-%) zugegeben, und über die Dosiervorrichtung wurden 150,0 g Dynasylan® 1122 zudosiert. Es wurden 2,94 g Ameisensäure (HCOOH = 85 Gew.-%) nachdosiert. Bei einem pH-Wert von 3,82 wurde 3 Stunden bei 65 °C nachgerührt und nochmals 1,29 g Ameisensäure (HCOOH = 85 Gew.-%) nachdosiert. Schließlich wurden bei einem pH von 3,8 und ca. 170 mbar 318,0 7g Alkohol/Wasser-Gemisch destillativ entfernt. Dem Ansatz wurden 27,67 g Wasser zugefügt. Der auf Raumtemperatur abgekühlte Rückstand wurde über eine Seitz T-950 Filterplatte filtriert. Die Auswaage des Rückstandes betrug 1312,33 g.
Es wurde eine klare, gelbliche Flüssigkeit mit einem pH-Wert von 4,3 erhalten. Das Produkt ist mindestens 6 Monate lagerstabil.

Trockenrückstand: 14,9 Gew.-%
$SiO_2$-Gehalt: 5,9 Gew.-%
Freies Methanol: 1,1 Gew.-%
Freies Ethanol: 1,1 Gew.-%

**Beispiel 3**

In einer 2-l-Rührapparatur mit Dosiervorrichtung und Rückflusskühler wurden unter Stickstoffatmosphäre 1338,3 g Wasser und 2 g Ameisensäure (HCOOH = 85 Gew.-%) vorgelegt. Es wurden 180,0 g GLYMO zudosiert (pH nach der Zugabe = 2,5) und auf 65 °C erhitzt und 1 Stunde gerührt. Es wurden 16,7 g Ameisensäure (HCOOH = 85 Gew.-%) zugegeben, und über die Dosiervorrichtung wurden 120,0 g Bis-AMEO zudosiert. Es wurden 1,5 g Ameisensäure (HCOOH = 85 Gew.-%) nachdosiert. Bei einem pH-Wert von 3,8 bis 4,0 wurde 3 Stunden bei 65 °C nachgerührt. Schließlich wurden bei ca. 200 mbar 342,12 g Alkohol/Wasser-Gemisch destillativ entfernt. Dem Ansatz wurden 74,79 g Wasser zugefügt. Der auf Raumtemperatur abgekühlte Rückstand wurde über eine Seitz T-950 Filterplatte filtriert. Die Auswaage des Rückstandes betrug 1280,21 g.

Es wurde eine klare, gelbliche Flüssigkeit mit einem pH-Wert von 5,0 erhalten. Das Produkt ist mindestens 6 Monate lagerstabil.

Trockenrückstand: 15,7 Gew.-%
$SiO_2$-Gehalt: 5,7 Gew.-%
Freies Methanol: 0,7 Gew.-%
Freies Ethanol: 0,5 Gew.-%

**Beispiel 4**

In einer 2-l-Rührapparatur mit Dosiervorrichtung und Rückflusskühler wurden unter Stickstoffatmosphäre 1329,2 g Wasser und 2 g Ameisensäure (HCOOH = 85 Gew.-%) vorgelegt. Es wurden 120,0g GLYMO zudosiert (pH nach der Zugabe = 2,5) und auf 65 °C erhitzt und 1 Stunde gerührt. Es wurden 25,9 g Ameisensäure (HCOOH = 85 Gew.-%) zugegeben, und über die Dosiervorrichtung wurden 180,0 g Bis-AMEO zudosiert. Bei einem pH-Wert von 4,0 wurde 3 Stunden bei 65 °C nachgerührt. Schließlich wurden bei ca. 200 mbar 344,57g Alkohol/Wasser-Gemisch destillativ entfernt. Dem Ansatz wurden 20,18 g Wasser zugefügt. Der auf Raumtemperatur abgekühlte Rückstand wurde über eine Seitz T-950 Filterplatte filtriert. Die Auswaage des Rückstandes betrug 1304,82 g.

Es wurde eine klare, gelbliche Flüssigkeit mit einem pH-Wert von 4,4 erhalten. Das Produkt ist mindestens 6 Monate lagerstabil.

Trockenrückstand: 15,0 Gew.-%
$SiO_2$-Gehalt: 6,1 Gew.-%
Freies Methanol: 0,7 Gew.-%
Freies Ethanol: 1,1 Gew.-%

**Beispiel 5**

In einer 2-l-Rührapparatur mit Dosiervorrichtung und Rückflusskühler wurden unter Stickstoffatmosphäre 1319,6 g Wasser und 2 g Ameisensäure (HCOOH = 85 Gew.-%) vorgelegt. Es wurden 60,0 g GLYMO zudosiert (pH nach der Zugabe = 2,5) und auf 65 °C erhitzt und 1 Stunde gerührt. Es wurden 34,5 g Ameisensäure (HCOOH = 85 Gew.-%) zugegeben, und über die Dosiervorrichtung wurden 240,0 g Bis-AMEO zudosiert. Bei einem pH-Wert von 3,8 bis 4,0 wurde 3 Stunden bei 65 °C nachgerührt. Schließlich wurden bei ca. 200 mbar 356,64g Alkohol/Wasser-Gemisch destillativ entfernt. Dem Ansatz wurden 95,71 g Wasser zugefügt, um den theoretischen Feststoffgehalt von 15 % zu erreichen. Jedoch war die Viskosität so hoch, dass zusätzlich mit 272,2 g Wasser auf einen Feststoffgehalt von ca. 10 % verdünnt wurde. Der auf Raumtemperatur abgekühlte Rückstand wurde über eine Seitz T-950 Filterplatte filtriert. Die Auswaage des Rückstandes betrug 1472,29 g. Es wurde eine klare, gelbliche Flüssigkeit mit einem pH-Wert von 4,4 erhalten.

Das Produkt ist mindestens 6 Monate lagerstabil.

Trockenrückstand: 10,4 Gew.-%
$SiO_2$-Gehalt: 4,3 Gew.-%
Freies Methanol: 0,2 Gew.-%
Freies Ethanol: 0,6 Gew.-%

**Beispiel 6**

In einer 2-l-Rührapparatur mit Dosiervorrichtung und Rückflusskühler wurden unter Stickstoffatmosphäre 1346,3 g Wasser und 2 g Ameisensäure (HCOOH = 85 Gew.-%) vorgelegt. Es wurden 210,0 g GLYMO zudosiert (pH nach der Zugabe = 2,5) und auf 65 °C erhitzt und 1 Stunde gerührt. Es wurden 11,73 g Ameisensäure (HCOOH = 85 Gew.-%) zugegeben, und über die Dosiervorrichtung wurden 90,0 g Bis-AMEO zudosiert. Bei einem pH-Wert von 4,0 wurde 3 Stunden bei 65 °C nachgerührt. Schließlich wurden bei ca. 180 mbar 335,16 g Alkohol/Wasser-Gemisch destillativ entfernt. Dem Ansatz wurden 72,14 g Wasser zugefügt. Der auf Raumtemperatur abgekühlte Rückstand wurde über eine Seitz T-950 Filterplatte filtriert. Die Auswaage des Rückstandes betrug 1299,86 g.

Es wurde eine klare, gelbliche Flüssigkeit mit einem pH-Wert von 4,2 erhalten.

Das Produkt ist mindestens 6 Monate lagerstabil.

Trockenrückstand: 15,6 Gew.-%

$SiO_2$-Gehalt: 5,8 Gew.-%

Freies Methanol: 1,1 Gew.-%

Freies Ethanol: 0,5 Gew.-%

**Beispiel 7**

In einer 2-l-Rührapparatur mit Dosiervorrichtung und Rückflusskühler wurden unter Stickstoffatmosphäre 1347,9 g Wasser und 2 g Ameisensäure (HCOOH = 85 Gew.-%) vorgelegt. Es wurden 240,0 g GLYMO zudosiert (pH nach der Zugabe = 2,5) und auf 65 °C erhitzt und 1 Stunde gerührt. Es wurden 7,1 g Ameisensäure (HCOOH = 85 Gew.-%) zugegeben, und über die Dosiervorrichtung wurden 60 g Bis-AMEO zudosiert. Bei einem pH-Wert von 4,0 bis 4,5 wurde 3 Stunden bei 65 °C nachgerührt. Es wurden zwischenzeitlich 3,0 g Ameisensäure (HCOOH = 85 Gew.-%) nachdosiert, um pH 3,5 zu erreichen. Schließlich wurden bei ca. 180 mbar 295,81 g Alkohol/Wasser-Gemisch destillativ entfernt. Dem Ansatz wurden 50,62 g Wasser zugefügt. Der auf Raumtemperatur abgekühlte Rückstand wurde über eine Seitz T-950 Filterplatte filtriert. Die Auswaage des Rückstandes betrug 1333,38 g.

Es wurde eine klare, gelbliche Flüssigkeit mit einem pH-Wert von 5,2 erhalten.

Das Produkt ist mindestens 6 Monate lagerstabil.

Trockenrückstand: 16,2 Gew.-%

$SiO_2$-Gehalt: 5,6 Gew.-%

Freies Methanol: 1,4 Gew.-%

Freies Ethanol: 0,4 Gew.-%

**Beispiel 8**

In einer 2-l-Rührapparatur mit Dosiervorrichtung und Rückflusskühler wurden unter Stickstoffatmosphäre 1353,2 g Wasser und 2 g Ameisensäure (HCOOH = 85 Gew.-%) vorgelegt. Es wurden 270 g GLYMO zudosiert (pH nach der Zugabe = 2,5) und auf 65 °C erhitzt und 1 Stunde gerührt. Es wurden 2,6 g Ameisensäure (HCOOH = 85 Gew.-%) zugegeben, und über die Dosiervorrichtung wurden 30,0 g Dynasylan® 1122 zudosiert. Bei einem pH-Wert von 4,3 wurde 3 Stunden bei 65 °C nachgerührt. Es wurden zwischenzeitlich 1,1 g Ameisensäure (HCOOH = 85 Gew.-%) nachdosiert, um pH 4,0 zu erreichen. Schließlich wurden bei ca. 180 mbar 289,82g Alkohol/Wasser-Gemisch destillativ entfernt. Dem Ansatz wurden 43,64 g Wasser und nochmals 0,5 g Ameisensäure (HCOOH = 85 Gew.-%) zugefügt. Der auf Raumtemperatur abgekühlte Rückstand wurde über eine Seitz T-950 Filterplatte filtriert. Die Auswaage des Rückstandes betrug 1355,06g.

Es wurde eine klare, gelbliche Flüssigkeit mit einem pH-Wert von 4,8 erhalten.

Das Produkt ist mindestens 6 Monate lagerstabil.

Trockenrückstand: 16,2 Gew.-%

$SiO_2$-Gehalt: 5,3 Gew.-%

Freies Methanol: 1,7 Gew.-%

Freies Ethanol: 0,2 Gew.-%

**Beispiel 9**

In einer 2-l-Rührapparatur mit Dosiervorrichtung und Rückflusskühler wurden unter Stickstoffatmosphäre 1524,8 g Wasser und 2 g Ameisensäure (HCOOH = 85 Gew.-%) vorgelegt. Es wurden 180,0 g GLYMO zudosiert (pH nach der Zugabe = 2,0) und auf 65 °C erhitzt und 1 Stunde gerührt. Es wurden 15,0 g Ameisensäure (HCOOH = 85 Gew.-%) zugegeben, und über die Dosiervorrichtung wurden 105,0 g Dynasylan® 1122 zudosiert. Bei einem pH-Wert von 4,0 wurden 15,0 g n-Propyltrimethoxysilan (PTMO) zugegeben und danach 3 Stunden bei 65 °C nachgerührt. Schließlich wurden bei ca. 130 mbar 585,35 g Alkohol/Wasser-Gemisch destillativ entfernt. Dem Ansatz wurden 4,83 g Wasser und nochmals 0,90 g Ameisensäure (HCOOH = 85 Gew.-%) zugefügt. Der auf Raumtemperatur abgekühlte Rückstand wurde über eine Seitz T-950 Filterplatte filtriert. Die Auswaage des Rückstandes betrug 1235,30 g. Es wurde eine klare, gelbliche Flüssigkeit mit einem pH-Wert von 4,5 erhalten.

Das Produkt ist mindestens 6 Monate lagerstabil.

Trockenrückstand: 16,8 Gew.-%
$SiO_2$-Gehalt:6,3 Gew.-%
Freies Methanol: 0,3 Gew.-%
Freies Ethanol: 0,1 Gew.-%

**Beispiel 10**

In einer 2-I-Rührapparatur mit Dosiervorrichtung und Rückflusskühler wurden unter Stickstoffatmosphäre 1220,0 g Wasser und 2 g Ameisensäure (HCOOH = 85 Gew.-%) vorgelegt. Es wurden 165,10g GLYMO zudosiert (pH nach der Zugabe = 2,5) und auf 65 °C erhitzt und 1 Stunde gerührt. Es wurden 15,0 g Ameisensäure (HCOOH = 85 Gew.-%) zugegeben, und über die Dosiervorrichtung wurden 105,0 g Bis-AMEO zudosiert. Bei einem pH-Wert von 4,0 wurden 30,0 g PTMO zugegeben und danach 3 Stunden bei 65 °C nachgerührt. Schließlich wurden bei ca. 130 mbar 323,13 g Alkohol/Wasser-Gemisch destillativ entfernt. Dem Ansatz wurden 158,76 g Wasser zugefügt. Der auf Raumtemperatur abgekühlte Rückstand wurde über eine Seitz T-950 Filterplatte filtriert. Die Auswaage des Rückstandes betrug 1196,54 g.

Es wurde eine klare, gelbliche Flüssigkeit mit einem pH-Wert von 4,5 erhalten.

Das Produkt ist mindestens 6 Monate lagerstabil.

Trockenrückstand: 15,2 Gew.-%
$SiO_2$-Gehalt: 6,0 Gew.-%
Freies Methanol: 1,4 Gew.-%
Freies Ethanol: 0,7 Gew.-%

**Beispiel 11**

In einer 2-I-Rührapparatur mit Dosiervorrichtung und Rückflusskühler wurden unter Stickstoffatmosphäre 1193,8 g Wasser und 2 g Ameisensäure (HCOOH = 85 Gew.-%) vorgelegt. Es wurden 152,6 g Levasil 100S/45 und anschließend 210 g GLYMO zudosiert (pH nach der Zugabe = 3,8) und auf 65 °C erhitzt und 1 Stunde gerührt. Es wurden 11,75 g Ameisensäure (HCOOH = 85 Gew.-%) zugegeben, und über die Dosiervorrichtung wurden 90 g Dynasylan® 1122 zudosiert. Insgesamt mussten noch 4,93 g Ameisensäure (HCOOH = 85 Gew.-%) zugegeben werden, um pH 3,8 zu erreichen. Danach wurde noch 3 Stunden bei 65 °C weitergerührt. Schließlich wurden bei ca. 180 mbar 374,22 g Alkohol/Wasser-Gemisch destillativ entfernt. Dem Ansatz wurden 92 g Wasser zugefügt. Der auf Raumtemperatur abgekühlte Rückstand wurde über einen Lackfilter filtriert. Die Auswaage des Rückstandes betrug 1279,92 g.

Es wurde eine milchig trübe, leicht orange Flüssigkeit mit einem pH-Wert von 4,0 erhalten.

Das Produkt ist mindestens 6 Monate lagerstabil.

Trockenrückstand: 20,3 Gew.-%
$SiO_2$-Gehalt: 9,7 Gew.-%
Freies Methanol: 0,8 Gew.-%
Freies Ethanol: 0,4 Gew.-%

**Beispiel 12**

In einer 2-I-Rührapparatur mit Dosiervorrichtung und Rückflusskühler wurden unter Stickstoffatmosphäre 1041,7 g Wasser und 3,63 g Ameisensäure (HCOOH = 85 Gew.-%) vorgelegt. Es wurden 305,0 g Levasil® 100S/45 und anschließend 210 g GLYMO zudosiert (pH nach der Zugabe = 3,5) und auf 65 °C erhitzt und 1 Stunde gerührt. Es wurden 11,79 g Ameisensäure (HCOOH = 85 Gew.-%) zugegeben, und über die Dosiervorrichtung wurden 90 g Bis-AMEO zudosiert. Insgesamt mussten noch 6,67 g Ameisensäure (HCOOH = 85 Gew.-%) zugegeben werden, um pH 3,8 zu erreichen. Danach wurde noch 3 Stunden bei 65 °C weiter gerührt. Schließlich wurden bei ca. 120 mbar 320,71g Alkohol/Wasser-Gemisch destillativ entfernt. Dem Ansatz wurden 55,38 g Wasser zugefügt. Der auf Raumtemperatur abgekühlte Rückstand wurde über einen Lackfilter filtriert. Die Auswaage des Rückstandes betrug 1316,62 g.

Es wurde eine milchig trübe Flüssigkeit mit einem pH-Wert von 3,9 erhalten.

Das Produkt ist mindestens 6 Monate lagerstabil.

Trockenrückstand: 25,4 Gew.-%
SiO$_2$-Gehalt: 13,9 Gew.-%
Freies Methanol: 1,0 Gew.-%
Freies Ethanol: 0,5 Gew.-%

**Beispiel 13**

In einer 2-l-Rührapparatur mit Dosiervorrichtung und Rückflusskühler wurden unter Stickstoffatmosphäre 954,9 g Wasser und 2,16 g Ameisensäure (HCOOH = 85 Gew.-%) vorgelegt. Es wurden 392 g HP 1535 und anschließend 210,8 g GLYMO zudosiert (pH nach der Zugabe = 3,0) und auf 65 °C erhitzt und 1 Stunde gerührt. Es wurden 11,79 g Ameisensäure (HCOOH = 85 Gew.-%) zugegeben, und über die Dosiervorrichtung wurden 90g Bis-AMEO zudosiert. Insgesamt mussten noch 2,58 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 16 0mbar 291,96 g Alkohol/Wasser-Gemisch destillativ entfernt. Dem Ansatz wurden 12,23 g Wasser sowie 1,04 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 1359,80g.
Es wurde eine leicht gelbe milchig trübe Flüssigkeit mit einem pH-Wert von 4,2 erhalten.
Das Produkt ist mindestens 6 Monate lagerstabil.

Trockenrückstand: 25,8 Gew.-%
SiO$_2$-Gehalt: 15,6 Gew.-%
Freies Methanol: 1,5 Gew.-%
Freies Ethanol: 0,7 Gew.-%

**Beispiel 14**

In einer 2-l-Rührapparatur mit Dosiervorrichtung und Rückflusskühler wurden unter Stickstoffatmosphäre 501,8 g Wasser und 1,5 g Ameisensäure (HCOOH = 85 Gew.-%) vorgelegt. Es wurden 171,6 g HP 5540 und anschließend 105,7 g GLYMO zudosiert (pH nach der Zugabe = 2,0) und auf 65 °C erhitzt und 1 Stunde gerührt. Es wurden 5,88 g Ameisensäure (HCOOH = 85 Gew.-%) zugegeben, und über die Dosiervorrichtung wurden 44,45 g Dynasylan® 1122 zudosiert. Es mussten noch 0,98 g Ameisensäure (HCOOH = 85 Gew.-%) zugegeben werden, um pH 3,8 zu erreichen. Danach wurde noch 3 Stunden bei 65 °C weiter gerührt. Schließlich wurden bei ca. 120 mbar 159,4 g Alkohol/Wasser-Gemisch destillativ entfernt. Dem Ansatz wurden 24,57 g Wasser sowie 0,92 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 661,44 g.
Es wurde eine milchig trübe Flüssigkeit mit einem pH-Wert von 4,0 erhalten.
Das Produkt ist mindestens 6 Monate lagerstabil.

Trockenrückstand: 25,8 Gew.-%
SiO$_2$-Gehalt: 15,5 Gew.-%
Freies Methanol: 1,1 Gew.-%
Freies Ethanol: 0,5 Gew.-%

**Beispiel 15**

In einer 2-l-Rührapparatur mit Dosiervorrichtung und Rückflusskühler wurden unter Stickstoffatmosphäre 1150,7 g Wasser und 2,0 g Ameisensäure (HCOOH = 85 Gew.-%) vorgelegt. Es wurden 196 g HP 1535 und anschließend 210 g GLYMO zudosiert (pH nach der Zugabe = 2,5) und auf 65 °C erhitzt und 1 Stunde gerührt. Es wurden 11,73 g Ameisensäure (HCOOH = 85 Gew.-%) zugegeben, und über die Dosiervorrichtung wurden 90g Bis-AMEO zudosiert. Es mussten noch 2,6 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 230 mbar 321,52 g Alkohol/Wasser-Gemisch destillativ entfernt. Dem Ansatz wurden 42,85 g Wasser sowie 1,0 g Ameisensäure (HCOOH = 85 Gew.-%) zugefügt. Der auf Raumtemperatur abgekühlte Rückstand wurde über einen Lackfilter filtriert. Die Auswaage des Rückstandes betrug 1329,12 g.
Es wurde eine milchig trübe Flüssigkeit mit einem pH-Wert von 4,3 erhalten.
Das Produkt ist mindestens 6 Monate lagerstabil.

Trockenrückstand: 20,7 Gew.-%

SiO$_2$-Gehalt: 10,7 Gew.-%
Freies Methanol: 1,1 Gew.-%
Freies Ethanol: 0,6 Gew.-%

**Beispiel 16**

In einer 2-I-Rührapparatur mit Dosiervorrichtung und Rückflusskühler wurden unter Stickstoffatmosphäre 758,8 g Wasser und 2,13 g Ameisensäure (HCOOH = 85 Gew.-%) vorgelegt. Es wurden 588 g HP 1535 und anschließend 210 g GLYMO zudosiert (pH nach der Zugabe = 2,5) und auf 65 °C erhitzt und 1 Stunde gerührt. Es wurden 11,73 g Ameisensäure (HCOOH = 85 Gew.-%) zugegeben, und über die Dosiervorrichtung wurden 90 g Dynasylan® 1122 zudosiert. Danach wurde noch 3 Stunden bei 65 °C weitergerührt. Schließlich wurden bei ca. 300 mbar 306,17g Alkohol/Wasser-Gemisch destillativ entfernt. Dem Ansatz wurden 25,15 g Wasser zugefügt. Der auf Raumtemperatur abgekühlte Rückstand wurde über einen Lackfilter filtriert. Die Auswaage des Rückstandes betrug 1346,94 g.
Es wurde eine milchig trübe Flüssigkeit mit einem pH-Wert von 4,2 erhalten.
Das Produkt ist mindestens 6 Monate lagerstabil.

Trockenrückstand: 30,8 Gew.-%
SiO$_2$-Gehalt: 20,5 Gew.-%
Freies Methanol: 1,3 Gew.-%
Freies Ethanol: 0,6 Gew.-%

**Beispiel 17**

In einer 2-I-Rührapparatur mit Dosiervorrichtung und Rückflusskühler wurden unter Stickstoffatmosphäre 831,9 g Wasser und 3,0 g Ameisensäure (HCOOH = 85 Gew.-%) vorgelegt. Es wurden 514,5 g HP 5540 und anschließend 210 g GLYMO zudosiert (pH nach der Zugabe = 2,0) und auf 65 °C erhitzt und 1 Stunde gerührt. Es wurden 11,74 g Ameisensäure (HCOOH = 85 Gew.-%) zugegeben, und über die Dosiervorrichtung wurden 90 g Dynasylan® 1122 zudosiert. Es mussten noch insgesamt 1,77 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 180 mbar 314,63 g Alkohol/Wasser-Gemisch destillativ entfernt. Dem Ansatz wurden 38,02 g Wasser zugefügt. Der auf Raumtemperatur abgekühlte Rückstand wurde über einen Lackfilter filtriert. Die Auswaage des Rückstandes betrug 1334,02 g.
Es wurde eine milchig trübe Flüssigkeit mit einem pH-Wert von 4,3 erhalten.
Das Produkt ist mindestens 6 Monate lagerstabil.

Trockenrückstand: 31,0 Gew.-%
SiO$_2$-Gehalt: 20,7 Gew.-%
Freies Methanol: 1,1 Gew.-%
Freies Ethanol: 0,5 Gew.-%

**Beispiel 18**

In einer 2-I-Rührapparatur mit Dosiervorrichtung und Rückflusskühler wurden unter Stickstoffatmosphäre 1003,7 g Wasser und 3,0 g Ameisensäure (HCOOH = 85 Gew.-%) vorgelegt. Es wurden 343 g HP 5540 und anschließend 210 g GLYMO zudosiert (pH nach der Zugabe = 3,0) und auf 65 °C erhitzt und 1 Stunde gerührt. Es wurden 11,88 g Ameisensäure (HCOOH = 85 Gew.-%) zugegeben, und über die Dosiervorrichtung wurden 90 g Bis-AMEO zudosiert. Es mussten noch 2,32 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 200 mbar 311,97g Alkohol/Wasser-Gemisch destillativ entfernt. Dem Ansatz wurden 28,71 g Wasser zugefügt. Der auf Raumtemperatur abgekühlte Rückstand wurde über einen Lackfilter filtriert. Die Auswaage des Rückstandes betrug 1343,39 g.
Es wurde eine milchig trübe Flüssigkeit mit einem pH-Wert von 4,2 erhalten.
Das Produkt ist mindestens 6 Monate lagerstabil.

Trockenrückstand: 25,9 Gew.-%
SiO$_2$-Gehalt: 15,7 Gew.-%
Freies Methanol: 1,1 Gew.-%
Freies Ethanol: 0,5 Gew.-%

**Beispiel 19**

In einer 2-l-Rührapparatur mit Dosiervorrichtung und Rückflusskühler wurden unter Stickstoffatmosphäre 1175,1 g Wasser und 3,0 g Ameisensäure (HCOOH = 85 Gew.-%) vorgelegt. Es wurden 171,5 g HP 5540 und anschließend 210 g GLYMO zudosiert (pH nach der Zugabe = 2,0) und auf 65 °C erhitzt und 1 Stunde gerührt. Es wurden 11,73 g Ameisensäure (HCOOH = 85 Gew.-%) zugegeben, und über die Dosiervorrichtung wurden 90 g Bis-AMEO zudosiert. Es mussten noch 0,91 g Ameisensäure (HCOOH = 85 Gew.-%) zugegeben werden, um pH 4,0 zu erreichen. Danach wurde noch 3 Stunden bei 65 °C weitergerührt. Schließlich wurden bei ca. 190 mbar 336,96 g Alkohol/Wasser-Gemisch destillativ entfernt. Dem Ansatz wurden 58,03 g Wasser zugefügt. Der auf Raumtemperatur abgekühlte Rückstand wurde über einen Lackfilter filtriert. Die Auswaage des Rückstandes betrug 1314,02 g.

Es wurde eine trübe hell beige Flüssigkeit mit einem pH-Wert von 5,0 erhalten.

Das Produkt ist mindestens 6 Monate lagerstabil.

Trockenrückstand: 21,2 Gew.-%
$SiO_2$-Gehalt: 10,7 Gew.-%
Freies Methanol: 0,9 Gew.-%
Freies Ethanol: 0,5 Gew.-%

**Beispiel 20**

In einer 2-l-Rührapparatur mit Dosiervorrichtung und Rückflusskühler wurden unter Stickstoffatmosphäre 1336,11 g Wasser und 2,07 g Ameisensäure (HCOOH = 85 Gew.-%) vorgelegt. Es wurden 150 g GLYMO zudosiert und auf 65 °C erhitzt und 1 Stunde gerührt. Es wurden 18,21 g Ameisensäure (HCOOH = 85 Gew.-%) zugegeben, und über die Dosiervorrichtung wurden 30 g Dynasylan® A und 120 g Dynasylan® 1122 zudosiert. Danach wurde noch 3 Stunden bei 65 °C weitergerührt. Schließlich wurden bei ca. 140 mbar 332,97g Alkohol/Wasser-Gemisch destillativ entfernt. Dem Ansatz wurden 13,65 g Wasser zugefügt. Der auf Raumtemperatur abgekühlte Rückstand wurde über eine Seitz T-950 Filterplatte filtriert. Die Auswaage des Rückstandes betrug 1311,58 g.

Es wurde eine klare gelbliche Flüssigkeit mit einem pH-Wert von 4,5 erhalten.

Das Produkt ist mindestens 6 Monate lagerstabil.

Trockenrückstand: 14,7 Gew.-%
$SiO_2$-Gehalt: 6,1 Gew.-%
Freies Methanol: 1,3 Gew.-%
Freies Ethanol: 1,1 Gew.-%

**Beispiel 21**

In einer 2-l-Rührapparatur mit Dosiervorrichtung und Rückflusskühler wurden unter Stickstoffatmosphäre 1419,98 g Wasser und 2,04 g Ameisensäure (HCOOH = 85 Gew.-%) vorgelegt. Es wurden 150 g GLYMO zudosiert und auf 65 °C erhitzt und 1 Stunde gerührt. Es wurden 11,80 g Ameisensäure (HCOOH = 85 Gew.-%) zugegeben, und über die Dosiervorrichtung wurden 60 g Dynasylan® A und 90 g Dynasylan® 1122 zudosiert. Danach wurde noch 3 Stunden bei 65 °C weitergerührt. Schließlich wurden bei ca. 150 mbar 417,63 g Alkohol/Wasser-Gemisch destillativ entfernt. Dem Ansatz wurden 81,99 g Wasser zugefügt. Der auf Raumtemperatur abgekühlte Rückstand wurde über eine Seitz T-950 Filterplatte filtriert. Die Auswaage des Rückstandes betrug 1306,34 g.

Es wurde eine klare gelbliche Flüssigkeit mit einem pH-Wert von 4,5 erhalten.

Das Produkt ist mindestens 6 Monate lagerstabil.

Trockenrückstand: 13,4 Gew.-%
$SiO_2$-Gehalt: 5,8 Gew.-%
Freies Methanol: 0,8 Gew.-%
Freies Ethanol: 0,7 Gew.-%

**Beispiel 22**

In einer 2-l-Rührapparatur mit Dosiervorrichtung und Rückflusskühler wurden unter Stickstoffatmosphäre 1525,36 g Wasser und 2,06 g Ameisensäure (HCOOH = 85 Gew.-%) vorgelegt. Es wurden 180 g GLYMO zudosiert und auf 65 °C erhitzt und 1 Stunde gerührt. Es wurden 15,00 g Ameisensäure (HCOOH = 85 Gew.-%) zugegeben, und über die Dosiervorrichtung wurden 15 g Si 264 und 105 g Dynasylan® 1122 und zudosiert. Danach wurde noch 3 Stunden bei 65 °C weitergerührt. Schließlich wurden bei ca. 130 mbar 408,08 g Alkohol/WasserGemisch destillativ entfernt. Dem Ansatz wurden 124,11 g Wasser zugefügt. Der auf Raumtemperatur abgekühlte Rückstand wurde über eine Seitz T-950 Filterplatte filtriert. Die Auswaage des Rückstandes betrug 1417,98 g.

Es wurde eine klare gelbliche Flüssigkeit mit einem pH-Wert von 4,5 erhalten.

Das Produkt ist mindestens 6 Monate lagerstabil.

Trockenrückstand: 13,4 Gew.-%
$SiO_2$-Gehalt: 5,1 Gew.-%
Freies Methanol: 0,9 Gew.-%
Freies Ethanol: 0,5 Gew.-%

**Beispiel 23**

In einer 2-I-Rührapparatur mit Dosiervorrichtung und Rückflusskühler wurden unter Stickstoffatmosphäre 1540,21 g Wasser und 2,06 g Ameisensäure (HCOOH = 85 Gew.-%) vorgelegt. Es wurden 180 g GLYMO zudosiert und auf 65 °C erhitzt und 1 Stunde gerührt. Es wurden 15,01 g Ameisensäure (HCOOH = 85 Gew.-%) zugegeben, und über die Dosiervorrichtung wurden 30 g Dynasylan® 2201 und 105 g Dynasylan® 1122 zudosiert. Danach wurde noch 3 Stunden bei 65 °C weitergerührt. Schließlich wurden bei ca. 150 mbar 424,56 g Alkohol/WasserGemisch destillativ entfernt. Dem Ansatz wurden 123,63 g Wasser zugefügt. Der auf Raumtemperatur abgekühlte Rückstand wurde über eine Seitz T-950 Filterplatte filtriert. Die Auswaage des Rückstandes betrug 1433,42 g.

Es wurde eine gelbliche Flüssigkeit mit einem pH-Wert von 4,5 erhalten.

Das Produkt ist mindestens 6 Monate lagerstabil.

Trockenrückstand: 13,5 Gew.-%
$SiO_2$-Gehalt: 5,1 Gew.-%
Freies Methanol: 0,8 Gew.-%
Freies Ethanol: 0,4 Gew.-%

**Beispiel 24**

In einer 2-I-Rührapparatur mit Dosiervorrichtung und Rückflusskühler wurden unter Stickstoffatmosphäre 1525,28 g Wasser und 2,02 g Ameisensäure (HCOOH = 85 Gew.-%) vorgelegt. Es wurden 179,91 g GLYMO zudosiert und auf 65 °C erhitzt und 1 Stunde gerührt. Es wurden 15,01 g Ameisensäure (HCOOH = 85 Gew.-%) zugegeben, und über die Dosiervorrichtung wurden 15,84 g Dynasylan® MTMO und 105,23 g DS 1127 zudosiert. Danach wurde noch 3 Stunden bei 65 °C weitergerührt. Schließlich wurden bei ca. 200 mbar 335,83 g Alkohol/Wasser-Gemisch destillativ entfernt. Dem Ansatz wurden 52,39 g Wasser zugefügt. Der auf Raumtemperatur abgekühlte Rückstand wurde über eine Seitz T-950 Filterplatte filtriert. Die Auswaage des Rückstandes betrug 1491,77 g.

Es wurde eine klare farblose Flüssigkeit mit einem pH-Wert von 4,5 erhalten.

Das Produkt ist mindestens 6 Monate lagerstabil.

Trockenrückstand: 13,5 Gew.-%
$SiO_2$-Gehalt: 5,1 Gew.-%
Freies Methanol: 1,1 Gew.-%
Freies Ethanol: 0,6 Gew.-%

**Beispiel 25**

In einer 2-I-Rührapparatur mit Dosiervorrichtung und Rückflusskühler wurden unter Stickstoffatmosphäre 1525,68 g Wasser und 2,02 g Ameisensäure (HCOOH = 85 Gew.-%) vorgelegt. Es wurden 180,15 g GLYMO zudosiert und auf 65 °C erhitzt und 1 Stunde gerührt. Es wurden 15,01 g Ameisensäure (HCOOH = 85 Gew.-%) zugegeben, und über die Dosiervorrichtung wurden 29,98 g Si 264 in Methanol (1:1) und 105 g Dynasylan® 1122 zudosiert. Danach wurde noch 3 Stunden bei 65 °C weitergerührt. Schließlich wurden bei ca. 130 mbar 370,58 g Alkohol/WasserGemisch destillativ entfernt. Dem Ansatz wurden 67,71 g Wasser zugefügt. Der auf Raumtemperatur abgekühlte Rückstand wurde über eine Seitz T-950 Filterplatte filtriert. Die Auswaage des Rückstandes betrug 1474,32 g.

Es wurde eine klare farblose Flüssigkeit mit einem pH-Wert von 4,5 erhalten.

Das Produkt ist mindestens 6 Monate lagerstabil.

Trockenrückstand: 13,6 Gew.-%

$SiO_2$-Gehalt: 5,1 Gew.-%
Freies Methanol: 1,3 Gew.-%
Freies Ethanol: 0,6 Gew.-%

**Beispiel 26**

In einer 2-I-Rührapparatur mit Dosiervorrichtung und Rückflusskühler wurden unter Stickstoffatmosphäre 1203,89 g Wasser und 3,00 g Ameisensäure (HCOOH = 85 Gew.-%) vorgelegt. Es wurden anschließend 135,68 g Köstrosol 3550 zügig zugegeben und 180 g Dynasylan® GLYMO über eine Dosiervorrichtung zudosiert. Der Ansatz wurde auf 65 °C erhitzt und 1 Stunde bei dieser Temperatur gerührt. Es wurden 17,7 g Ameisensäure (HCOOH = 85 Gew.-%) zugegeben, und über die Dosiervorrichtung wurden 120 g Dynasylan® 1122 zudosiert. Danach wurde 3 Stunden bei 65 °C weitergerührt und zusätzlich 1,11 g Ameisensäure (HCOOH = 85 Gew.-%) zugegeben. Schließlich wurde bei ca. 180 mbar 340,64 g Alkohol/WasserGemisch destillativ entfernt. Dem Ansatz wurden 38,80 g VE-Wasser zugefügt.
Die Auswaage des Rückstands betrug 1347,82 g.
Dem Ansatz wurden erneut bei ca. 180 mbar 36,19 g Alkohol/Wasser-Gemisch destillativ entfernt und mit 51,22 g VE-Wasser versetzt. Der abgekühlte Rückstand wurde über eine Seitz T-950 Filterplatte filtriert.
Die Auswaage des Rückstands betrug 1347,82 g.
Es wurde eine milchig weiße Flüssigkeit mit einem pH-Wert von ca. 4,3 erhalten.
Das Produkt ist mindestens 6 Monate lagerstabil.

Trockenrückstand: 20,6 Gew.-%
$SiO_2$-Gehalt: 10,8 Gew.-%
Freies Methanol: 0,4 Gew.-%
Freies Ethanol: 0,7 Gew.-%

**Beispiel 27**

In einer 2-I-Rührapparatur mit Dosiervorrichtung und Rückflusskühler wurden unter Stickstoffatmosphäre 1067,61 g Wasser und 3,00 g Ameisensäure (HCOOH = 85 Gew.-%) vorgelegt. Es wurden anschließend 271,09 g Köstrosol 3550 zügig zugegeben und 180,16 g GLYMO über eine Dosiervorrichtung zudosiert. Der Ansatz wurde auf 65 °C erhitzt und 1 Stunde bei dieser Temperatur gerührt.
Nachdem 1 Stunde bei 65 °C gerührt wurde, wurde der Ansatz mit zusätzlich 2,79 g Ameisensäure (HCOOH = 85 Gew.-%) auf pH 3,0 eingestellt und nochmal 0,5 Stunden bei 65 °C gerührt. Anschließend wurden 17,71 g Ameisensäure (HCOOH = 85 Gew.-%) zugegeben und 120,06 g Dynasylan® 1122 zudosiert. Danach wurde der Ansatz 3 Stunden bei 65 °C weitergerührt und nochmals mit 3,21 g Ameisensäure (HCOOH = 85 Gew.-%) versetzt. Schließlich wurden bei ca. 160 mbar 343,80 g Alkohol/Wasser-Gemisch destillativ entfernt.
Dem Ansatz wurden 48,91 g VE-Wasser zugefügt.
Der abgekühlte Rückstand wurde über eine Seitz T-950 Filterplatte filtriert.
Die Auswaage des Rückstands betrug 1308,51 g.
Es wurde eine milchig weiße Flüssigkeit mit einem pH-Wert von ca. 4,0 erhalten.
Das Produkt ist mindestens 6 Monate lagerstabil.

Trockenrückstand: 26,0 Gew.-%
$SiO_2$-Gehalt: 15,8 Gew.-%
Freies Methanol: 1,0 Gew.-%
Freies Ethanol: 0,5 Gew.-%

**Beispiel 28**

In einer 2-I-Rührapparatur mit Dosiervorrichtung und Rückflusskühler wurden unter Stickstoffatmosphäre 1203,54 g Wasser und 2,99 g Ameisensäure (HCOOH = 85 Gew.-%) vorgelegt. Es wurden anschließend 135,59 g Köstrosol 3550 zügig zugegeben und 165 g GLYMO über eine Dosiervorrichtung zudosiert. Der Ansatz wurde auf 65 °C erhitzt und 2 Stunden bei dieser Temperatur gerührt.

Trockenrückstand: 20,4 Gew.-%
$SiO_2$-Gehalt: 13,6 Gew.-%
Freies Methanol: 1,2 Gew.-%
Freies Ethanol: 0,5 Gew.-%

### Beispiel 29

In einer 2-I-Rührapparatur mit Dosiervorrichtung und Rückflusskühler wurden unter Stickstoffatmosphäre 1203,16 g Wasser und 3,00 g Ameisensäure (HCOOH = 85 Gew.-%) vorgelegt. Es wurden anschließend 135,55 g Köstrosol 3550 zügig zugegeben und 165 g GLYMO über eine Dosiervorrichtung zudosiert. Der Ansatz wurde auf 65 °C erhitz und 2 Stunden bei dieser Temperatur gerührt.

Trockenrückstand: 20,5 Gew.-%
$SiO_2$-Gehalt: 11,0 Gew.-%
Freies Methanol: 1,5 Gew.-%
Freies Ethanol: 0,6 Gew.-%

### Beispiel 30

In einer 2-I-Rührapparatur mit Dosiervorrichtung und Rückflusskühler wurden unter Stickstoffatmosphäre 1112,88 g Wasser und 1,01 g Ameisensäure (HCOOH = 85 Gew.-%) vorgelegt. Es wurden zunächst 225,49 g Köstrosol K 1530 (pH nach der Zugabe = 3,5), dann 180 g GLYMO zudosiert, auf 65 °C erhitzt und 1 Stunde gerührt. Anschließend wurden 18,71 g Ameisensäure (HCOOH = 85 Gew.-%) zugegeben, und über die Dosiervorrichtung wurden 120 g Bis-AMEO zudosiert. Bei einem pH-Wert von 4,0 wurde 3 Stunden bei 65 °C gerührt. Schließlich wurden bei ca. 130 mbar 321,56 g Alkohol/Wasser-Gemisch destillativ entfernt. Dem Ansatz wurden 20,23 g Wasser zugefügt. Der auf RT abgekühlte Rückstand wurde über eine Seitz T-950-Filterplatte filtriert. Die Auswaage des Rückstandes betrug 1334,77 g.
Es wurde eine Flüssigkeit mit einem pH-Wert von 4,0 erhalten. Das Produkt ist mindestens 6 Monate lagerstabil.

Trockenrückstand: 20,9 Gew.-%
$SiO_2$-Gehalt: 10,5 Gew.-%
Freies Methanol: 1,2 Gew.-%
Freies Ethanol: 0,8 Gew.-%

### Beispiel 31

In einer 2-I-Rührapparatur mit Dosiervorrichtung und Rückflusskühler wurden unter Stickstoffatmosphäre 1220,56 g Wasser und 2,02 g Ameisensäure (HCOOH = 85 Gew.-%) vorgelegt. Es wurden 180 g GLYMO zudosiert und auf 65 °C erhitzt und 1 Stunde gerührt. Anschließend wurden 15,00 g Ameisensäure (HCOOH = 85 Gew.-%) zugegeben, und über die Dosiervorrichtung wurden 90 g Bis-AMEO zudosiert. Nach 15 Minuten wurden 30,0 g PTMO zugegeben. Bei einem pH-Wert von 4,0 wurde 3 Stunden bei 65 °C gerührt. Schließlich wurden bei ca. 130 mbar 316,39 g Alkohol/Wasser-Gemisch destillativ entfernt. Dem Ansatz wurden 18,68 g Wasser zugefügt. Der auf RT abgekühlte Rückstand wurde über eine Seitz T-950-Filterplatte filtriert. Die Auswaage des Rückstandes betrug 1212,58 g.
Es wurde eine klare, gelbliche Flüssigkeit mit einem pH-Wert von 4,0 erhalten. Das Produkt ist mindestens 6 Monate lagerstabil.

Trockenrückstand: 16,9 Gew.-%
$SiO_2$-Gehalt: 6,7 Gew.-%
Freies Methanol: 1,6 Gew.-%
Freies Ethanol: 0,6 Gew.-%

### Beispiel 32

In einer 2-I-Rührapparatur mit Dosiervorrichtung und Rückflusskühler wurden unter Stickstoffatmosphäre 1333,02 g Wasser und 1,98 g Ameisensäure (HCOOH = 85 Gew.-%) vorgelegt. Es wurden 135,69 g GLYMO zudosiert (pH nach der Zugabe = 3,0) und auf 65 °C erhitzt und 1 Stunde gerührt. Anschließend wurden 20,09 g Ameisensäure (HCOOH = 85 Gew.-%) zugegeben, und über die Dosiervorrichtung wurden 120,01 g Bis-AMEO zudosiert. Nach 15 Minuten wurden 44,96 g PTMO zugegeben. Bei einem pH-Wert von 3,9 wurde 3 Stunden bei 65 °C gerührt. Schließlich wurden bei ca. 130 mbar 344,63 g Alkohol/Wasser-Gemisch destillativ entfernt. Dem Ansatz wurden 45,51 g Wasser zugesetzt. Der auf RT abgekühlte Rückstand wurde über eine Seitz K-900-Filterplatte filtriert. Die Auswaage des Rückstandes betrug 1340,46 g.
Es wurde eine klare, gelbliche Flüssigkeit mit einem pH-Wert von 3,9 erhalten. Das Produkt ist mindestens 6 Monate lagerstabil.

Trockenrückstand: 14,7 Gew.-%
SiO$_2$-Gehalt: 6,9 Gew.-%
Freies Methanol: 1,0 Gew.-%
Freies Ethanol: 0,6 Gew.-%

### Beispiel 33

In einer 2-I-Rührapparatur mit Dosiervorrichtung und Rückflusskühler wurden unter Stickstoffatmosphäre 1324,50 g Wasser und 2,01 g Ameisensäure (HCOOH = 85 Gew.-%) vorgelegt. Es wurden 120,27 g GLYMO zudosiert (pH nach der Zugabe = 3,0) und auf 65 °C erhitzt und 1 Stunde gerührt. Danach wurden 22,01 g Ameisensäure (HCOOH = 85 Gew.-%) zugegeben, und über die Dosiervorrichtung wurden 119,75 g Bis-AMEO zudosiert. Nach 15 Minuten wurden 60,35 g PTMO zugegeben. Bei einem pH-Wert von 3,9 wurde 3 Stunden bei 65 °C gerührt. Schließlich wurden bei ca. 130 mbar 314,81 g Alkohol/Wasser-Gemisch destillativ entfernt. Dem Ansatz wurden 3,59 g Wasser zugefügt. Der auf RT abgekühlte Rückstand wurde über eine Seitz K-900-Filterplatte filtriert. Die Auswaage des Rückstandes betrug 1329,04 g. Es wurde eine klare, gelbliche Flüssigkeit mit einem pH-Wert von 3,9 erhalten. Das Produkt ist mindestens 6 Monate lagerstabil.

Trockenrückstand: 14,8 Gew.-%
SiO$_2$-Gehalt: 6,0 Gew.-%
Freies Methanol: 1,4 Gew.-%
Freies Ethanol: 0,8 Gew.-%

### Beispiel 34

In einer 2-I-Rührapparatur mit Dosiervorrichtung und Rückflusskühler wurden unter Stickstoffatmosphäre 1265,70 g Wasser und 3,05 g Ameisensäure (HCOOH = 85 Gew.-%) vorgelegt. Es wurden zunächst 133,43 g Köstrosol 3550 (pH nach der Zugabe = 3,0), dann 134,93 g GLYMO zudosiert, auf 65 °C erhitzt und 1 Stunde gerührt. Es wurden 21,08g Ameisensäure (HCOOH = 85 Gew.-%) zugegeben, und über die Dosiervorrichtung wurden 119,97 g Bis-AMEO zudosiert. Nach 15 Minuten Rühren wurden 44,99 g PTMO zugegeben. Bei einem pH-Wert von 3,9 wurde 3 Stunden bei 65 °C gerührt. Schließlich wurden bei ca. 130 mbar 370,09 g Alkohol/Wasser-Gemisch destillativ entfernt. Dem Ansatz wurden 32,57 g Wasser zugefügt. Der auf RT abgekühlte Rückstand wurde über eine Seitz K-900-Filterplatte filtriert. Die Auswaage des Rückstandes betrug 1340,09 g.
Es wurde eine milchig trübe Flüssigkeit mit einem pH-Wert von 3,9 erhalten. Das Produkt ist mindestens 6 Monate lagerstabil.

Trockenrückstand: 19,8 Gew.-%
SiO$_2$-Gehalt: 11,0 Gew.-%
Freies Methanol: 1,3 Gew.-%
Freies Ethanol: 1,1 Gew.-%

### Beispiel 35

In einer 2-I-Rührapparatur mit Dosiervorrichtung und Rückflusskühler wurden unter Stickstoffatmosphäre 1275,04 g Wasser und 1,96 g Ameisensäure (HCOOH = 85 Gew.-%) vorgelegt. Es wurden 120,23 g GLYMO zudosiert (pH nach der Zugabe = 3,0) und auf 65 °C erhitzt und 1 Stunde gerührt. Es wurden 18,03 g Ameisensäure (HCOOH = 85 Gew.-%) zugegeben, und über die Dosiervorrichtung wurden zunächst 30,12 g Dynasylan® A zugegeben und gerührt bis der leicht trübe Ansatz klar wurde. Dann wurden 119,98 g Bis-AMEO zudosiert. Nach 15 Minuten wurden 30,08 g PTMO zugegeben. Bei einem pH-Wert von 3,9 wurde 3 Stunden bei 65 °C gerührt. Schließlich wurden bei ca. 130 mbar 340,64 g Alkohol/Wasser-Gemisch destillativ entfernt. Der auf RT abgekühlte Rückstand wurde über eine Seitz K-900-Filterplatte filtriert. Die Auswaage des Rückstandes betrug 1259,89 g.
Es wurde eine klare, gelbliche Flüssigkeit mit einem pH-Wert von 3,9 erhalten. Das Produkt ist mindestens 6 Monate lagerstabil.
Trockenrückstand: 17,4 Gew.-% (für die Durchführung der Anwendungsversuche wurde das Produkt mit VE-Wasser auf 15 Gew.-% Feststoffgehalt verdünnt)

SiO$_2$-Gehalt: 6,2 Gew.-%
Freies Methanol: 1,2 Gew.-%
Freies Ethanol: 1,2 Gew.-%

**Versuche zur Stabilität wässriger Bindemittel im alkalischen Bereich**

| Bindemittel aus | Feststoffgehalt (Gew.-%) nach Zugabe wässriger KOH | pH-Wert mit wässriger KOH eingestellt auf | Bewertung der Stabilität des alkalisch eingestellten Bindemittels |
|---|---|---|---|
| Beispiel 8 | 10 | 12 | stabil |
| Beispiel 7 | 10 | 12 | stabil |
| Beispiel 6 | 10 | 12 | stabil |
| Beispiel 3 | 10 | 12 | stabil |
| Beispiel 2 | 10 | 12 | stabil |
| Der pH-Wert von Proben der sauren, wässrigen Bindemittel aus den Beispielen 2, 3, 6, 7 und 8 wurden mit einer 10 %igen wässrigen KOH-Lösung auf pH 12 eingestellt. Dabei erfolgte der Zusatz an Alkalilauge rasch. Die in der Tabelle als "stabil" gekennzeichneten Beispiele waren mindestens 1 Woche bei dem angegebene pH-Wert stabil. | | | |

**Anwendungsbeispiele**

**1. Reinigung der Stahlprüfbleche R-36 aus DC01 C290, 152x76x0,8 mm (Rocholl)**

Die Stahlprüfbleche wurden mit einem organischen Lösungsmittel (Ethylacetat) gereinigt und anschließend in ein alkalisches Reinigungsbad gestellt (Zusammensetzung: 10,0 g/l S 5610 (Chemetall), pH 11,5, 60 °C, 35 sec). Nach der alkalischen Reinigung wurden die Metallsubstrate mit VE-Wasser gespült. Das überschüssige Wasser wurde mit einer Druckluftpistole von der Oberfläche abgeblasen.

**2. Korrosionsuntersuchungen**

Die Korrosionstests (auch kurz NSS genannt) wurden in einem Salzsprühnebel durchgeführt (Prüfung nach DIN 50021-SS).

Die Gitterschnitt-Tests wurden gemäß EN ISO 2409 durchgeführt.

**3. Für die Anwendungsbeispiele verwendete Zusätze**

- Zinc dust "superfine" 3 Micron (Numinor) (Zinkpulver)
- MIOX MICRO 30 (Kärntner Montanindustrie) (natürlicher Eisenglimmer)
- Bayferrox Rot 130 BM (Harald-Scholz Co. & GmbH) (org. Farbmittel mit $Fe_2O_3$)
- Zinc Oxide Red Seal (NUMINOR) (Zinkoxid)
- Sikron M500 (SIBELCO, Benelux) (kristalliner Silica Staub, $SiO_2$-Pulver)

**4. Für die vergleichenden Anwendungsbeispiele eingesetzte Bindemittel**

Für die Anwendungsbeispiele wurden folgende Bindemittel eingesetzt:

Bindemittel 1    nachgestellt gemäß Beispiel 3 aus WO2006/079516 (Vergleichsmittel) Trockenrückstand 16,2 Gew.-%
Bindemittel 2    Dynasylan® AR (Vergleichsmittel, lösemittelhaltig) Trockenrückstand 27,3 Gew.-%
Bindemittel 3    aus Beispiel 6 (70 % GLYMO) Trockenrückstand 15,6 Gew.-%
Bindemittel 4    aus Beispiel 2 (50 % GLYMO) Trockenrückstand 14,9 Gew.-%
Bindemittel 5    aus Beispiel 9 (60 % GLYMO) Trockenrückstand 16,8 Gew.-%
Bindemittel 6    aus Beispiel 30 Trockenrückstand 20,9 Gew.-%
Bindemittel 7    aus Beispiel 31 Trockenrückstand 15,0 Gew.-%
Bindemittel 8    aus Beispiel 35 Trockenrückstand 17,4 Gew.-%

**5. Zusätze und Herstellung der Zusätze B und C erfolgte im Universal-Mischgerät, Maschinen-Typ AM 501 T, von Hauschild**

- Zusatz-Mischung B: 12,06 Gew.-% Zinc Oxide Red Seal, 12,08 Gew.-% Bayferrox Rot 130 BM, 35,86 Gew.-% MIOX MICRO 30, 40,00 Gew.-% Zinc dust 3 Micron
- Zusatz-Mischung C: 43,13 Gew.-% Sikron M500, 43,13 Gew.-% Zinc dust 3 Micron, 13,74 Gew.-% MIOX MICRO 30
- Zusatz M: Sikron M500
- Zusatz D: Aerosil® 300

Die Herstellung der Zusätze B und C erfolgte im Universal-Mischgerät (Maschinen-Typ AM 501 T der Firma Hauschild). Die Zusatz-Mischungen B und C wurden jeweils 3 x 30 sec bei 3000 rpm im Universal-Mischgerät gemischt.

**6. Die Herstellung der Zusammensetzungen für die vergleichenden Anwendungsbeispiele erfolgte im Universal-Mischgerät (Maschinen-Typ AM 501 T der Firma Hauschild)**

Der betreffende Zusatz bzw. Zusatz-Mischung wurde jeweils 3 x 20 sec lang bei 3000 rpm in das betreffende Bindemittel dispergiert, siehe Tabellen 1 und 2.

**Tabelle 1:**

| Hergestellte Zusammensetzungen für Vergleichsbeispiele (Der pH-Wert der Zusammensetzungen wurde jeweils 30 Minuten nach Zubereitung gemessen.): | | | | | | |
|---|---|---|---|---|---|---|
| Vergleichsbeispiele | Bindemittel | Zusatz | Masse Bindemittel [g] | Masse Zusatz [g] | Gewichtsverhältnis Bindemittel : Zusatz | pH-Wert |
| 1 | 1 | 75 Gew.-% B, 25 Gew.-% M | 4,0 | 8,0 | 1 : 2 | 7,1 |
| 2 | 2 | 75 Gew.-% B, | 5,0 | 16,0 | 1 : 3,2 | 7,2 |
| Vergleichsbeispiele | Bindemittel | Zusatz | Masse Bindemittel [g] | Masse Zusatz [g] | Gewichtsverhältnis Bindemittel : Zusatz | pH-Wert |
| | | 25 Gew.-% M | | | | |
| 3 | 1 | C | 4,0 | 8,0 | 1 : 2 | 7,2 |
| 4 | 2 | C | 4,0 | 16,0 | 1 : 4 | 7,1 |
| 5 | 1 | 75 Gew.-% B, 25 Gew.-% M | 4,0 | 8,0 | 1 : 2 | 7,3 |

**Tabelle 2:**

| Hergestellte Zusammensetzungen für erfindungsgemäße Anwendungsbeispiele (Der pH-Wert der Zusammensetzungen wurde jeweils 30 Minuten nach Zubereitung gemessen.): | | | | | | |
|---|---|---|---|---|---|---|
| Anwendungsbeispiele | Bindemittel | Zusatz | Masse Bindemittel [g] | Masse Zusatz [g] | Gewichtsverhältnis Bindemittel/ Zusatz | pH-Wert |
| 1 | 3 | 75 Gew.-% B, 25 Gew.-% M | 4,0 | 8,0 | 1 : 2 | 7,1 |

(fortgesetzt)

| Hergestellte Zusammensetzungen für erfindungsgemäße Anwendungsbeispiele (Der pH-Wert der Zusammensetzungen wurde jeweils 30 Minuten nach Zubereitung gemessen.): | | | | | | |
|---|---|---|---|---|---|---|
| Anwendungsbeispiele | Bindemittel | Zusatz | Masse Bindemittel [g] | Masse Zusatz [g] | Gewichtsverhältnis Bindemittel/ Zusatz | pH-Wert |
| 2 | 4 | C | 4,0 | 8,0 | 1 : 2 | 7,2 |
| 3 | 5 | 75 Gew.-% B, 25 Gew.-% M | 4,0 | 8,0 | 1 : 2 | 7,1 |
| 4 | 4 | 72,5 Gew.-% B, 22,5 Gew.-% M, 5 Gew.-% D | 4,0 | 8,0 | 1 : 2 | 7,3 |
| 5 | 6 | 75 Gew.-% B, 25 Gew.-% M | 4,0 | 10,0 | 1 : 2,5 | 7,1 |
| 6 | 7 | 75 Gew.-% B, 25 Gew.-% M | 4,0 | 10,0 | 1 : 2,5 | 7,2 |
| Anwendungsbeispiele | Bindemittel | Zusatz | Masse Bindemittel [g] | Masse Zusatz [g] | Gewichtsverhältnis Bindemittel/ Zusatz | pH-Wert |
| 7 | 8 | 75 Gew.-% B, 25 Gew.-% M | 4,0 | 10,0 | 1 : 2,5 | 7,1 |

## 7. Beschichtung der gereinigten Stahlprüfbleche

Die gemäß den Tabellen 1 und 2 hergestellten Formulierungen bzw. Zusammensetzungen wurden mittels einer Lack-Hantel mit einer Nassschichtdicke von 80 μm auf die vorbereiteten Stahlprüfbleche, vgl. Punkt 1, aufgetragen.

Nach dem Beschichten wurden die Platten 24 Stunden bei 20 °C getrocknet und angeritzt.

Die Haftung der beschichteten Substrate wurde mittels Gitterschnitt-Test geprüft.

Ergebnisse "Gitterschnitt" (EN ISO 2409) nach 24 Stunden Härtung bei 20 °C:

| | |
|---|---|
| Vergleichsbeispiel 1: | 1 |
| Vergleichsbeispiel 2: | 1 |
| Anwendungsbeispiel 1: | 1 |
| Vergleichsbeispiel 3: | 0 |
| Vergleichsbeispiel 4: | 1 |
| Anwendungsbeispiel 2: | 1 |
| Vergleichsbeispiel 5: | 2 |
| Anwendungsbeispiel 3: | 0 |
| Anwendungsbeispiel 4: | 1 |

Darüber hinaus wurden die beschichteten und geritzten Substrate im Salzsprühnebel (DIN 50021-SS) auf Korrosionsbeständigkeit geprüft und beurteilt.

Ergebnisse nach 26 Stunden Salzsprühtest (vgl. auch Tabelle 3):

| | |
|---|---|
| Vergleichsbeispiel 1: | Korrosion am Ritz und teilweise in der Fläche |
| Vergleichsbeispiel 2: | weitgehend korrosionsfrei |
| Anwendungsbeispiel 1: | weitgehend korrosionsfrei |
| Vergleichsbeispiel 3: | Korrosion am Ritz und und in der Fläche |
| Vergleichsbeispiel 4: | Abplatzungen der Beschichtung mit Korrosion |
| Anwendungsbeispiel 2: | weitgehend korrosionsfrei |

Ergebnisse nach 150 Stunden im Salzsprühnebel (vgl. auch Tabelle 3):

Vergleichsbeispiel 5: Korrosion am Ritz und teilweise in der Fläche
Anwendungsbeispiel 3: keine Korrosion am Ritz und der Fläche
Anwendungsbeispiel 4: Korrosion am Ritz und teilweise in der Fläche

Die Probe aus Anwendungsbeispiel 3 wurde mit einem 2K-Epoxyharz beschichtet: Standox, EP-Grundierfüller und Standox EP-Härter. Mischungsverhältnis 2:1 (nach Vorschrift). Das Beschichtungssystem wurde mit einer Rakel (80 $\mu$m Nassschichtdicke, $\sim$ 30 $\mu$m Trockenschichtdicke) aufgetragen und 24 Stunden bei 20 °C gehärtet. Eine Vergleichsprobe (nur gereinigtes Stahlblech) wurde ebenfalls beschichtet.
Gitterschnitt Probe 1 (Anwendungsbeispiel 3 + Epoxyharzbeschichtung): 0 Gitterschnitt Probe 2 (Stahlblech + Epoxyharzbeschichtung): 0
Beide Proben wurden mit 1 mm Ritzer angeritzt und im Salzsprühnebel auf Korrosion untersucht. Nach 200 h zeigte Probe 2 massive Korrosion am Ritz und Abplatzungen, während Probe 1 auch am Ritz korrosionsfrei war.
Die Ergebnisse aus der Anwendungsuntersuchungen sind in der nachfolgenden Tabelle 3 nochmals zusammengefasst, da die Wiedergabe entsprechender, geeigneter Abbildungen in Patentschriften leider noch nicht möglich ist.

**Tabelle 3:**

| Zusammenstellung der Ergebnisse aus den anwendungstechnischen Untersuchungen vor und nach Salzsprühtest | | | | | |
|---|---|---|---|---|---|
| Anwendungsbeispiel | Vergleichsbeispiel | Bindemittel | Vor Korrosionstest Gitterschnitt nach EN ISO 2409 [1] | Korrosionstest: Neutraler Salzsprühtest nach DIN 50021-SS | |
| | | | | Bewertung [2] | Stundenanzahl |
| - | 1 | 1 | 1 | 0 | 26 h |
| - | 2 | 2 | 1 | + | 26 h |
| 1 | - | 3 | 1 | + | 26 h |
| - | 3 | 1 | 0 | -- | 26 h |
| - | 4 | 2 | 1 | - | 26 h |
| 2 | - | 4 | 1 | + | 26 h |
| - | 5 | 1 | 2 | 0 | 150 h |
| 3 | - | 5 | 0 | ++ | 150 h |
| 4 | - | 4 | 1 | 0 | 150 h |
| 5 | - | 6 | 1 | + | 150 h |
| 6 | - | 7 | 4 | 0 | 250 h |
| 7 | - | 8 | 3 | 0 | 135 h |
| 1) Gitterschnitt nach 24 Stunden Härtung bei 20°C der beschichteten Probebleche | | | | | |
| 2) Bewertung: | | | | | |
| ++ Keine Korrosion am Ritz und in der Fläche. | | | | | |
| + Weitgehend Korrosionsfrei am Ritz sowie in der Fläche. | | | | | |
| 0 Korrosion am Ritz und teilweise in der Fläche. | | | | | |
| - Abplatzungen der Beschichtungen mit Korrosion. | | | | | |
| -- Starke Korrosion am Ritz und in der Fläche. | | | | | |

**Zusammenfassend ist festzuhalten:**

Vergleichsbeispiele 1 und 2 sowie Anwendungsbeispiel 1 nach 26 Stunden im Salzsprühnebel:

Vergleichsbeispiel 1 zeigt bereits nach 26 Stunden Korrosion am Ritz und teilweise in der Fläche. Im Gegensatz dazu sind Anwendungsvergleichsbeispiel 2 und Anwendungsbeispiel 1 ohne Korrosion am Ritz.

Vergleichsbeispiele 3 und 4 sowie Anwendungsbeispiel 2 nach 26 Stunden im Salzsprühnebel:

Vergleichsbeispiel 3 zeigt nach 26 Stunden im Salzsprühnebel Korrosion am Ritz und in der Fläche, während Anwendungsvergleichsbeispiel 4 nur etwas Korrosion am Ritz aufweist, aber es können einige Abplatzungen beobachtet werden. Die besten Ergebnisse zeigt Anwendungsbeispiel 2. Es kann keine Korrosion am Ritz festgestellt werden.

Vergleichsbeispiel 5 sowie Anwendungsbeispiele 3 und 4 nach 150 Stunden im Salzsprühnebel:

Vergleichsbeispiel 5 und Anwendungsbeispiel 4 zeigen nach 150 Stunden im Salzsprühnebel Korrosion am Ritz, während Anwendungsbeispiel 3 nach 150 Stunden am Ritz vollkommen korrosionsfrei ist.

Anwendungsbeispiel 5 zeigt nach 28, 90 und 150 Stunden keine Korrosion am Ritz. Jedoch ist in der Fläche eine leichte Verfärbung zu beobachten.
Anwendungsbeispiel 6 zeigt nach 17 Stunden keine Korrosion am Ritz, nach 150 Stunden teilweise Korrosion am Ritz und nach 250 Stunden fast durchgehend Korrosion am Ritz. Die Fläche ist aber korrosionsfrei.
Anwendungsbeispiel 7 zeigt nach 19 Stunden im Salzsprühnebel keine Korrosion am Ritz. Jedoch kann nach 135 Stunden eine durchgehende Korrosion am Ritz festgestellt werden.

**Patentansprüche**

1.   Zusammensetzung umfassend

- ein Bindemittel enthaltend mindestens ein Cokondensat auf der Basis von einem ω-Glycidyloxyalkylalkoxysilan der Formel I

$$X\text{-}Si(R^2)_x(OR^1)_{3-x} \qquad (I),$$

worin X für eine 2-(3,4-Epoxycyclohexyl)ethyl-, 1-Glycidyloxymethyl-, 2-Glycidyloxyethyl-, 3-Glycidyloxypropyl- oder 3-Glycidyloxyisobutyl-Gruppe steht, $R^1$ sowie $R^2$ unabhängig von einander eine lineare oder verzweigte Alkyl-Gruppe mit 1 bis 4 C-Atomen darstellen, und x gleich 0 oder 1 ist,
und mindestens einem Bis(alkoxysilylalkyl)amin der allgemeinen Formel II

$$(OR^1)_3Si \text{ - A - Si } (OR^1)_3 \qquad (II),$$

worin die Gruppen $R^1$ gleich oder verschieden sind und $R^1$ eine lineare oder verzweigte Alkyl-Gruppe mit 1 bis 4 C-Atomen darstellt und A für eine bis-aminofunktionelle Gruppe der Formel IIa steht

$$\text{-}(CH_2)_i\text{-}[NH(CH_2)_f]_gNH[(CH_2)_{f*}NH]_{g*}\text{-}(CH_2)_{i*}\text{-} \qquad (IIa),$$

worin i, i*, f, f*, g oder g* gleich oder verschieden sind, mit i und/ oder i* = 1, 2, 3 oder 4, f und/ oder f* = 1 oder 2, g und/ oder g* = 0 oder 1,
sowie optional mindestens einer weiteren Siliciumverbindung aus der Reihe Tetraalkoxysilan, Alkylalkoxysilan, Mercaptoalkylalkoxysilan, Carboxyalkylalkoxysilan, Aminoalkylalkoxysilan, Ureidoalkylalkoxysilan, Thiocyanatoalkylalkoxysilan und der Kieselsole,
- Wasser,
- Alkohol in eine Menge von weniger als 3 Gew.-%, bezogen auf die Zusammensetzung,

- mindestens einen Zusatz aus der Reihe partikulärer Metalle und/oder Metalllegierungen, wobei der Zusatz aus der Reihe der partikulären Metalle und/oder Metalllegierungen ausgewählt ist aus der Reihe Zinkpulver, Zinklamellen, Zinkstaub, Pulver oder Lamellen oder Staub aus Zinklegierungen, Zinkwismutlegierungen, und

- optional mindestens ein Additiv,

wobei der pH-Wert in der Zusammensetzung 1 bis 14 beträgt und der Trockenrückstand des Bindemittels 1 bis 50 Gew.-%, bezogen auf das eingesetzte Bindemittel, beträgt.

2. Zusammensetzung nach Anspruch 1,
wobei man zur Herstellung des Bindemittels
Wasser in einem molaren Überschuss, bezogen auf die eingesetzten Silane gemäß der Formeln I, II sowie ggf. der zuvor genannten Siliciumverbindungen, vorlegt und unter Zusatz einer organischen oder anorganischen Säure auf einen sauren pH-Wert einstellt und optional dabei ein Kieselsol zusetzt, ein ω-Glycidyloxyalkylalkoxysilan der Formel I zudosiert und erwärmt, optional Säure nachdosiert
und mindestens ein Bis(alkoxysilylalkyl)amin der allgemeinen Formel II sowie optional mindestens eine weitere Siliciumverbindung aus der Reihe Tetraalkoxysilan, Alkylalkoxysilan, Mercaptoalkylalkoxysilan, Carboxyalkylalkoxysilan, Aminoalkylalkoxysilan, Ureidoalkylalkoxysilan und Thiocyanatoalkylalkoxysilan zudosiert und reagieren lässt,
anschließend den dabei entstandenen Hydrolysealkohol unter vermindertem Druck zumindest anteilig aus dem Reaktionsgemisch entfernt,
das so erhaltene Bindemittel optional mit Wasser und/ oder einer wässrigen Säure verdünnt und anschließend filtriert, wobei der Trockenrückstand des Bindemittels 1 bis 50 Gew.-%, vorzugsweise 5 bis 40 Gew.-%, besonders bevorzugt 8 bis 35 Gew.-%, insbesondere 10 bis 25 Gew.-%, bezogen auf das eingesetzte Bindemittel, beträgt.

3. Zusammensetzung nach Anspruch 1 oder 2,
gekennzeichnet durch
einen Trockenrückstand (Feststoffgehalt) von 1 bis 50 Gew.-%, vorzugsweise 3 bis 45 Gew.-%, besonders bevorzugt 3 bis 35 Gew.-%, bezogen auf die Zusammensetzung.

4. Zusammensetzung nach einem der Ansprüche 1 bis 3,
dadurch gekennzeichnet,
dass Gehalt der partikulären Metalle und/oder Metalllegierungen in der Zusammensetzung 1 bis 95 Gew.-%, vorzugsweise 3 bis 90 Gew.-%, besonders bevorzugt 5 bis 85 Gew.-%, ganz besonders bevorzugt 10 bis 80 Gew.-%, beträgt.

5. Zusammensetzung nach einem der Ansprüche 1 bis 4,
dadurch gekennzeichnet,
dass die Additive aus der Reihe der Entschäumer, Verdickungsmittel, Rheologiehilfsmittel, Dispersionshilfsmittel, Antiabsetzmittel, Rostinhibitoren, Benetzungsmittel, organischen Pigmente, Polymere bzw. Polymerdispersionen sowie der Katalysatoren für die Kondensation und Härtung ausgewählt sind.

6. Zusammensetzung nach einem der Ansprüche 1 bis 5,
gekennzeichnet durch
einen Gehalt an Additiven insbesondere an Verdickungsmittel von 0 bis 5 Gew.-% und/ oder an Antiabsetzmittel von 0 bis 5 Gew.-% und/ oder an Benetzungsmittel von 0 bis 3 Gew.-% an Korrosionsinhibitor von 0 bis 1 Gew.-%, jeweils bezogen auf die Zusammensetzung, wobei die Summe aller in der Zusammensetzung befindlichen Bestandteile 100 Gew.-% ergeben.

7. Verfahren zur Herstellung einer Zusammensetzung nach einem der Ansprüche 1 bis 6,
dadurch gekennzeichnet,
dass man zunächst ein Bindemittel enthaltend mindestens ein Cokondensat auf der Basis von einem ω-Glycidyloxyalkylalkoxysilan der Formel I

$$X\text{-}Si(R^2)_x(OR^1)_{3-x} \qquad (I),$$

worin X für eine 2-(3,4-Epoxycyclohexyl)ethyl-, 1-Glycidyloxymethyl-, 2-Glycidyloxyethyl-, 3-Glycidyloxypropyl- oder 3-Glycidyloxyisobutyl-Gruppe steht, $R^1$ sowie $R^2$ unabhängig von einander eine lineare oder verzweigte Alkyl-Gruppe mit 1 bis 4 C-Atomen darstellen, und x gleich 0 oder 1 ist,
und
mindestens einem Bis(alkoxysilylalkyl)amin der allgemeinen Formel II

$$(OR^1)_3Si \text{ - } A \text{ - } Si(OR^1)_3 \qquad (II),$$

worin die Gruppen $R^1$ gleich oder verschieden sind und $R^1$ eine lineare oder verzweigte Alkyl-Gruppe mit 1 bis 4 C-Atomen darstellt und A für eine bisaminofunktionelle Gruppe der Formel IIa steht

$$-(CH_2)_i-[NH(CH_2)_f]_gNH[(CH_2)_{f*}NH]_{g*}-(CH_2)_{i*}- \qquad (IIa),$$

worin i, i\*, f, f\*, g oder g\* gleich oder verschieden sind, mit i und/ oder i\* = 1, 2, 3 oder 4, f und/ oder f\* = 1 oder 2, g und/ oder g\* = 0 oder 1,
sowie
optional mindestens einer weiteren Siliciumverbindung aus der Reihe Tetraalkoxysilan, Alkylalkoxysilan, Mercaptoalkylalkoxysilan, Carboxyalkylalkoxysilan, Aminoalkylalkoxysilan, Ureidoalkylalkoxysilan, Thiocyanatoalkylalkoxysilan und der Kieselsole
herstellt, indem man
Wasser in einem molaren Überschuss, bezogen auf die eingesetzten Silane gemäß der Formeln I, II sowie ggf. der zuvor genannten Siliciumverbindungen, vorlegt und
unter Zusatz einer organischen oder anorganischen Säure auf einen sauren pH-Wert einstellt und optional dabei ein Kieselsol unter Rühren zusetzt, ein ω-Glycidyloxyalkylalkoxysilan der Formel I zudosiert und erwärmt, optional Säure nachdosiert
und mindestens ein Bis(alkoxysilylalkyl)amin der allgemeinen Formel II sowie optional mindestens eine weitere Siliciumverbindung aus der Reihe Tetraalkoxysilan, Alkylalkoxysilan, Mercaptoalkylalkoxysilan, Carboxyalkylalkoxysilan, Aminoalkylalkoxysilan, Ureidoalkylalkoxysilan und Isocyanatoalkylalkoxysilan, zudosiert und reagieren lässt,
anschließend den dabei entstandenen Hydrolysealkohol unter vermindertem Druck zumindest anteilig aus dem Reaktionsgemisch entfernt,
das so erhaltene Bindemittel optional mit Wasser und/ oder einer wässriger Säure und/oder einer wässrigen Base verdünnt bzw. den pH-Wert einstellt, anschließend filtriert
und
in das so erhaltenen Bindemittel mindestens einen Zusatz aus der Reihe der partikulären Metalle und/oder Metalllegierungen dispergiert sowie optional mindestens ein Additiv einrührt und optional den pH-Wert in der Zusammensetzung einstellt.

8.  Verfahren nach Anspruch 7,
    **dadurch gekennzeichnet,**
    **dass** man das ω-Glycidyloxyalkylalkoxysilan der Formel I in einem molaren Verhältnis zum Bis(alkoxysilylalkyl)amin der allgemeinen Formel II von 0,1 zu 99,9 bis 99 zu 1 einsetzt, insbesondere setzt man das ω-Glycidyloxyalkylalkoxysilan im Bindemittel mit 0,001 bis 42 Mol-%, bevorzugt von 0,01 bis 30 Mol-%, besonders bevorzugt von 0,1 bis 15 Mol-%, ganz besonderes bevorzugt von 0,2 bis 1,5 Mol-% ein.

9.  Verfahren nach Anspruch 7 oder 8,
    **dadurch gekennzeichnet,**
    **dass** man Wasser in einem molaren Überschuss, bezogen auf die eingesetzten Silane gemäß der Formeln I und II sowie optional der zuvor genannten Siliciumverbindungen, geeigneterweise 2 bis 1000 Mol Wasser, vorzugsweise 5 bis 500 Mol, insbesondere 10 bis 100 Mol Wasser pro Mol der vorliegenden Sigebundenen Alkoxygruppen der eingesetzten Silane unter Schutzgas vorlegt, wobei die Umsetzung bevorzugt unter Stickstoff oder Argon durchgeführt wird.

10. Verfahren nach einem der Ansprüche 7 bis 9,
    **dadurch gekennzeichnet,**
    **dass** die organischen oder anorganischen Säure ausgewählt ist aus der Reihe Ameisensäure, Essigsäure, Propionsäure, Salzsäure, Salpetersäure, Schwefelsäure, Phosphorsäure und die wässrige Base ausgewählt ist aus der Reihe Natronlauge, Kalilauge, N,N-Dimethylethanolamin, Tetrakis(triethanolamin)-Zirkonat und man den pH-Wert während und/oder nach der Umsetzung im Bindemittel und/oder nach Formulierung in der Zusammensetzung auf 1 bis 14, vorzugsweise 2 bis 12, besonders bevorzugt 2,5 bis 9, ganz besonders bevorzugt 3 bis 8, insbesondere auf 3,5; 4; 4,5; 5; 5,5; 6; 6,5; 7; 7,5; 8 sowie 8,5 einstellt, wobei auch der Zusatz des partikulären Metalls bzw. Metalllegierung zum Bindemittel zu einer Veränderung des pH-Werts führen kann, vorzugsweise bei Zusatz von Zink oder einer Zinklegierung zu einem sauer eingestellten Bindemittel.

11. Verfahren nach einem der Ansprüche 7 bis 10,
    **dadurch gekennzeichnet,**

man als ω-Glycidyloxyalkylalkoxysilan der Formel I 3-Glycidyloxypropyltrimethoxysilan und/ oder 3-Glycidyloxypropyltriethoxysilan einsetzt bzw. zudosiert und das erhaltene saure wässrige Gemisch über 0,1 bis 3 Stunden, vorzugsweise 0,5 bis 2 Stunden, unter Rühren bzw. Mischen auf eine Temperatur von 50 bis 90 °C, vorzugsweise 60 bis 65 °C, erwärmt.

12. Verfahren nach einem der Ansprüche 7 bis 11,
**dadurch gekennzeichnet**,
man dem erwärmten, sauren und ω-Glycidyloxyalkylalkoxysilan enthaltenden Gemisch Bis(trimethoxysilylpropyl)amin und/oder Bis(triethoxysilylpropyl)amin und optional als weitere Siliciumverbindung ein Tetraalkoxysilan, vorzugsweise Tetramethoxysilan, Tetraethoxysilan, ein Alkylalkoxysilan, vorzugsweise C1-C16-Alkylalkoxysilane, insbesondere Methyltrimethoxysilan, Methyltriethoxysilan, n-Propyltrimethoxysilan (PTMO), n-Propyltriethoxysilan (PTEO), i-Butyltrimethoxysilan (IBTMO), i-Butyltriethoxysilan (IBTEO), Octyltrimethoxysilan (OCTMO), Octyltriethoxysilan (OCTEO), Mercaptoalkylalkoxysilan, vorzugsweise 3-Mercaptopropyltrimethoxysilan (MTMO), Mercaptopropyltrimethoxysilan (MTEO), Aminoalkylalkoxysilan, vorzugsweise 3-Aminopropyltrimethoxysilan (AMMO), 3-Aminopropyltriethoxysilan (AMEO), N-(2-Aminoethyl)-3-aminopropyltrimethoxysilan (DAMO), N-(2-Aminoethyl)-3-aminopropyltriethoxysilan, N, N'-Diaminoethyl-3-aminopropyltrimethoxysilan (TriAMO), N, N'-Diaminoethyl-3-aminopropyltriethoxysilan, ein Carboxyalkyltrialkoxysilan, ein Ureidoalkylalkoxysilan, vorzugsweise 3-Ureidopropyltrimethoxysilan, 3-Ureidopropyltriethoxysilan, und/oder ein Thiocyanatoalkylalkoxysilan, vorzugsweise 3-Thiocyanatopropyltrimethoxysilan, 3-Thiocyanatopropyltrimethoxysilan, bei einem pH-Wert von 2 bis 6, vorzugsweise 3 bis 5, zudosiert und unter Rühren bei 50 bis 90 °C, vorzugsweise 60 bis 65 °C, über 0,3 bis 6 Stunden, vorzugsweise 1 bis 4 Stunden, reagieren lässt, d. h. die eingesetzten Alkoxysilane im Wesentlichen vollständig hydrolysiert und kondensiert bzw. cokondensiert.

13. Verwendung einer Zusammensetzung nach einem der Ansprüche 1 bis 6 oder hergestellt nach einem der Ansprüche 7 bis 12 für Beschichtungen, die bei einer Temperatur von 16 bis 26 °C an der Luft aushärten.

14. Verwendung nach Anspruch 13 für Beschichtungen von Metallen und Metalllegierungen zum Schutz vor Korrosion.

## Claims

1. Composition comprising

   - a binder comprising at least one cocondensate based on an ω-glycidyloxyalkylalkoxysilane of the formula I

$$X-Si(R2)_x(OR^1)_{3-x} \qquad (I),$$

   in which X is a 2-(3,4-epoxycyclohexyl)ethyl, 1-glycidyloxymethyl, 2-glycidyloxyethyl, 3-glycidyloxypropyl or 3-glycidyloxyisobutyl group, $R^1$ and $R^2$ independently of one another are each a linear or branched alkyl group having 1 to 4 C atoms, and x is 0 or 1,
   and on at least one bis(alkoxysilylalkyl)amine of the general formula II

$$(OR^1)_3Si - A - Si (OR^1)_3 \qquad (II),$$

   in which the groups $R^1$ are identical or different and $R^1$ is a linear or branched alkyl group having 1 to 4 C atoms and A is a bis-amino-functional group of the formula IIa

$$- (CH_2)_i -[NH(CH_2)_f]_g NH[(CH_2)_{f*}NH]_{g*} -(CH_2)_{i*}- \qquad (IIa),$$

   in which i, i*, f, f*, g or g* are identical or different, with i and/or i* = 1, 2, 3 or 4, f and/or f* = 1 or 2, g and/or g* = 0 or 1, and also, optionally, on at least one further silicon compound from the group consisting of tetraalkoxysilane, alkylalkoxysilane, mercaptoalkylalkoxysilane, carboxyalkylalkoxysilane, aminoalkylalkoxysilane, ureidoalkylalkoxysilane, thiocyanatoalkylalkoxysilane and silica sols,
   - water,
   - alcohol in an amount of less than 3% by weight, based on the composition,
   - at least one addition from the group consisting of particulate metals and/or metal alloys, the addition from the group consisting of particulate metals and/or metal alloys being selected from the group consisting of zinc powders, zinc flakes, zinc dust, powders or flakes or dust of zinc alloys, zinc-bismuth alloys, and

- optionally at least one additive,

the pH in the composition being 1 to 14 and the dry residue of the binder being 1% to 50% by weight, based on the binder used.

2. Composition according to Claim 1,
where for preparing the binder
water is introduced in a molar excess, based on the silanes of the formulae I and II and also, optionally, on the aforementioned silicon compounds used and is adjusted to an acidic pH with addition of an organic or inorganic acid, a silica sol being added optionally,
an ω-glycidyloxyalkylalkoxysilane of the formula I is metered in and the mixture is heated,
optionally further acid is metered in,
and at least one bis(alkoxysilylalkyl)amine of the general formula II and also optionally at least one further silicon compound from the group consisting of tetraalkoxysilane, alkylalkoxysilane, mercaptoalkylalkoxysilane, carboxyalkylalkoxysilane, aminoalkylalkoxysilane, ureidoalkylalkoxysilane and thiocyanatoalkylalkoxysilane is metered in and the system is caused to react,
subsequently the resultant hydrolysis alcohol is removed at least proportionately from the reaction mixture under reduced pressure,
the binder thus obtained is optionally diluted with water and/or an aqueous acid and is subsequently filtered,
the dry residue of the binder being 1% to 50% by weight, preferably 5% to 40% by weight, more preferably 8% to 35% by weight, more particularly 10% to 25% by weight, based on the binder used.

3. Composition according to Claim 1 or 2,
**characterized by**
a dry residue (solids content) of 1% to 50% by weight, preferably 3% to 45% by weight, more preferably 3% to 35% by weight, based on the composition.

4. Composition according to any of Claims 1 to 3,
**characterized in that**
the amount of the particulate metals and/or metal alloys in the composition is 1% to 95% by weight, preferably 3% to 90% by weight, more preferably 5% to 85% by weight, very preferably 10% to 80% by weight.

5. Composition according to any of Claims 1 to 4,
**characterized in that**
the additives are selected from the group consisting of defoamers, thickeners, rheological assistants, dispersion assistants, anti-settling agents, rust inhibitors, wetting agents, organic pigments, polymers and polymer dispersions, and also catalysts for the condensation and curing.

6. Composition according to any of Claims 1 to 5,
**characterized by**
an amount of additives, more particularly of thickener, of 0% to 5% by weight and/or of anti-settling agent of 0% to 5% by weight and/or of wetting agent of 0% to 3% by weight of corrosion inhibitor of 0% to 1% by weight, based in each case on the composition, the sum of all the constituents present in the composition making 100% by weight.

7. Process for preparing a composition according to any of Claims 1 to 6,
**characterized in that**
first of all a binder comprising at least one cocondensate based on an ω-glycidyloxyalkylalkoxysilane of the formula I

$$X\text{-}Si(R^2)_x(OR^1)_{3-x} \qquad (I),$$

in which X is a 2-(3,4-epoxycyclohexyl)ethyl, 1-glycidyloxymethyl, 2-glycidyloxyethyl, 3-glycidyloxypropyl or 3-glycidyloxyisobutyl group, $R^1$ and $R^2$ independently of one another are each a linear or branched alkyl group having 1 to 4 C atoms, and x is 0 or 1,
and
on at least one bis(alkoxysilylalkyl)amine of the general formula II

$$(OR^1)_3Si\text{ - }A\text{ - }Si\,(OR^1)_3 \qquad (II),$$

in which the groups $R^1$ are identical or different and $R^1$ is a linear or branched alkyl group having 1 to 4 C atoms and A is a bis-amino-functional group of the formula

$$- (CH_2)_i \text{-}[NH(CH_2)_f]_g NH[(CH_2)_{f*}NH]_{g*} \text{-}(CH_2)_{i*}\text{-} \qquad (IIa),$$

in which i, i*, f, f*, g or g* are identical or different, with i and/or i* = 1, 2, 3 or 4, f and/or f* = 1 or 2, g and/or g* = 0 or 1, and also, optionally, on at least one further silicon compound from the group consisting of tetraalkoxysilane, alkylalkoxysilane, mercaptoalkylalkoxysilane, carboxyalkylalkoxysilane, aminoalkylalkoxysilane, ureidoalkylalkoxysilane, thiocyanatoalkylalkoxysilane and silica sols
is prepared by a procedure in which
water is introduced in a molar excess, based on the silanes of the formulae I and II and also, optionally, on the aforementioned silicon compounds used, and
is adjusted to an acidic pH with addition of an organic or inorganic acid, a silica sol being added with stirring optionally, an ω-glycidyloxyalkylalkoxysilane of the formula I is metered in and the mixture is heated, optionally further acid is metered in,
and at least one bis(alkoxysilylalkyl)amine of the general formula II and also optionally at least one further silicon compound from the group consisting of tetraalkoxysilane, alkylalkoxysilane, mercaptoalkylalkoxysilane, carboxyalkylalkoxysilane, aminoalkylalkoxysilane, ureidoalkylalkoxysilane and isocyanatoalkyl-alkoxysilane is metered in and the system is caused to react,
subsequently the resultant hydrolysis alcohol is removed at least proportionately from the reaction mixture under reduced pressure,
the binder thus obtained is optionally diluted with water and/or an aqueous acid and/or an aqueous base, or the pH is adjusted, and the binder is subsequently filtered,
and
at least one addition from the group consisting of the particulate metals and/or metal alloys is dispersed into the binder thus obtained and also, optionally, at least one additive is incorporated with stirring and optionally the pH in the composition is adjusted.

8. Process according to Claim 7,
   **characterized in that**
   the ω-glycidyloxyalkylalkoxysilane of the formula I is used in a molar ratio to the bis(alkoxysilylalkyl)amine of the general formula II of 0.1:99.9 to 99:1; more particularly the ω-glycidyloxyalkylalkoxysilane is used in the binder at 0.001 to 42 mol%, preferably from 0.01 to 30 mol%, more preferably from 0.1 to 15 mol%, very preferably from 0.2 to 1.5 mol%.

9. Process according to Claim 7 or 8,
   **characterized in that**
   water is introduced in a molar excess, based on the silanes of the formulae I and II and also, optionally, the aforementioned silicon compounds used, of suitably 2 to 1000 mol of water, preferably 5 to 500 mol, more particularly 10 to 100 mol of water per mole of the Si-bonded alkoxy groups present in the silanes used, under inert gas, the reaction being carried out preferably under nitrogen or argon.

10. Process according to any of Claims 7 to 9,
    **characterized in that**
    the organic or inorganic acid is selected from the group consisting of formic acid, acetic acid, propionic acid, hydrochloric acid, nitric acid, sulphuric acid and phosphoric acid and the aqueous base is selected from the group consisting of sodium hydroxide, potassium hydroxide, N,N-dimethylethanolamine and tetrakis(triethanolamine) zirconate, and the pH is adjusted during and/or after the reaction in the binder and/or after formulation in the composition to 1 to 14, preferably 2 to 12, more preferably 2.5 to 9, very preferably 3 to 8, more particularly to 3.5; 4; 4.5; 5; 5.5; 6; 6.5; 7; 7.5; 8 and also 8.5, it also being possible for the addition of the particulate metal and/or metal alloy to the binder to result in a change in the pH, preferably on addition of zinc or a zinc alloy to an acidified binder.

11. Process according to any of Claims 7 to 10,
    **characterized in that**
    3-glycidyloxypropyltrimethoxysilane and/or 3-glycidyloxypropyltriethoxysilane are used and metered in as ω-glycidyloxyalkylalkoxysilane of the formula I, and the acidic aqueous mixture obtained is heated over 0.1 to 3 hours, preferably 0.5 to 2 hours, with stirring and/or mixing, to a temperature of 50 to 90 °C, preferably 60 to 65 °C.

**12.** Process according to any of Claims 7 to 11,
**characterized in that**
the heated, acidic and ω-glycidyloxyalkylalkoxysilane-containing mixture is admixed in metered form with bis(trimethoxysilylpropyl)amine and/or bis(triethoxysilylpropyl)amine and optionally as further silicon compound with a tetraalkoxysilane, preferably tetramethoxysilane, tetraethoxysilane, an alkylalkoxysilane, preferably C1-C16-alkylalkoxysilanes, more particularly methyltrimethoxysilane, methyltriethoxysilane, n-propyltrimethoxysilane (PTMO), n-propyltriethoxysilane (PTEO), isobutyl-trimethoxysilane (IBTMO), isobutyltriethoxysilane (IBTEO), octyltrimethoxysilane (OCTMO), octyltriethoxysilane (OCTEO), mercaptoalkylalkoxysilane, preferably 3-mercaptopropyltrimethoxysilane (MTMO), mercaptopropyltrimethoxysilane (MTEO), aminoalkylalkoxysilane, preferably 3-aminopropyltrimethoxysilane (AMMO), 3-aminopropyltriethoxysilane (AMEO), N-(2-aminoethyl)-3-aminopropyltrimethoxysilane (DAMO), N-(2-aminoethyl)-3-aminopropyltriethoxysilane, N,N'-diaminoethyl-3-aminopropyltrimethoxysilane (TriAMO), N,N'-diaminoethyl-3-aminopropyltriethoxysilane, a carboxyalkyltrialkoxysilane, a ureidoalkylalkoxysilane, preferably 3-ureidopropyltrimethoxysilane, 3-ureidopropyltriethoxysilane, and/or a thiocyanatoalkylalkoxysilane, preferably 3-thiocyanatopropyltrimethoxysilane, 3-thiocyanatopropyltrimethoxysilane, at a pH of 2 to 6, preferably 3 to 5, and is caused to react with stirring at 50 to 90 °C, preferably 60 to 65 °C, over 0.3 to 6 hours, preferably 1 to 4 hours, i.e. the alkoxysilanes used are substantially completely hydrolysed and condensed or cocondensed.

**13.** Use of a composition according to any of Claims 1 to 6 or prepared according to any of Claims 7 to 12 for coatings which cure in the air at a temperature of 16 to 26 °C.

**14.** Use according to Claim 13 for coatings on metals and metal alloys for protection from corrosion.

**Revendications**

**1.** Composition contenant

- un liant contenant au moins un produit de co-condensation à base d'un co-glycidyloxyalkylalcoxysilane de formule I

$$X\text{-}Si(R^2)_x(OR^1)_{3-x} \qquad (I),$$

dans laquelle X représente un groupe 2-(3,4-époxycyclohexyl)éthyle, 1-glycidyloxyméthyle, 2-glycidyloxyéthyle, 3-glycidyloxypropyle ou 3-glycidyloxyisobutyle, $R^1$ ainsi que $R^2$ représentent indépendamment l'un de l'autre un groupe alkyle linéaire ou ramifié ayant de 1 à 4 atomes de carbone, et x est égal à 0 ou 1, et au moins une bis(alcoxysilylalkyl)amine de formule générale II

$$(OR^1)_3Si \text{ - } A \text{ - } Si(OR^1)_3 \qquad (II),$$

dans laquelle les groupes $R^1$ sont identiques ou différents et $R^1$ représente un groupe alkyle linéaire ou ramifié ayant de 1 à 4 atomes de carbone et A représente un groupe à fonction bis-amino de formule

$$\text{- } (CH_2)_i\text{-}[NH(CH_2)_f]_gNH[(CH_2)_{f*}NH]_{g*}\text{-}(CH_2)_{i*}\text{-} \qquad (IIa)$$

dans laquelle i, i*, f, f*, g ou g* sont identiques ou différents, avec i et/ou i* = 1, 2, 3 ou 4, f et/ou f* = 1 ou 2, g et/ou g* = 0 ou 1,
ainsi qu'en option au moins un autre composé de silicium de la série tétraalcoxysilane, alkylalcoxysilane, mer-captoalkylalcoxysilane, carboxyalkylalcoxysilane, aminoalkylalcoxysilane, uréidoalkylalcoxysilane, thiocyana-toalkylalcoxysilane et des sols de silice,
- de l'eau,
- un alcool en une quantité de moins de 3 % en poids, par rapport à la composition,
- au moins un ajout de la série des métaux et/ou alliages métalliques particulaires, l'ajout de la série des métaux et/ou alliages métalliques particulaires étant choisi dans la série constituée par la poudre de zinc, les lamelles de zinc, la poussière de zinc, la poudre ou les lamelles ou la poussière d'alliages de zinc, les alliages bismuth-zinc, et
- en option au moins un additif,

le pH de dans la composition valant de 1 à 14 et le résidu sec du liant valant de 1 à 50 % en poids, par rapport au liant utilisé.

2. Composition selon la revendication 1,
   pour laquelle dans la préparation du liant on dispose au préalable de l'eau en un excès molaire par rapport aux silanes de formules I, II utilisés, ainsi qu'éventuellement aux composés de silicium précités, et on ajuste à un pH acide par addition d'un acide organique ou inorganique et en option on ajoute en outre un sol de silice, on ajoute par addition dosée un ω-glycidyloxyalkylalcoxysilane de formule I et on chauffe, en option on ajoute ensuite par addition dosée un acide et on ajoute par addition dosée au moins une bis(alcoxysilylalkyl)amine de formule générale II ainsi qu'en option au moins un autre composé de silicium de la série tétraalcoxysilane, alkylalcoxysilane, mercaptoalkylalcoxysilane, carboxyalkylalcoxysilane, aminoalkylalcoxysilane, uréidoalkylalcoxysilane et thiocyanatoalkylalcoxysilane et on fait réagir, ensuite on sépare sous pression réduite du mélange réactionnel au moins en partie l'alcool d'hydrolyse ainsi formé, en option on dilue avec de l'eau et/ou un acide aqueux le liant ainsi obtenu et ensuite on le filtre, le résidu sec du liant valant de 1 à 50 % en poids, de préférence 5 à 40 % en poids, de façon particulièrement préférée 8 à 35 % en poids, en particulier 10 à 25 % en poids, par rapport au liant utilisé.

3. Composition selon la revendication 1 ou 2,
   **caractérisée par**
   un résidu sec (teneur en matière solide) de 1 à 50 % en poids, de préférence 3 à 45 % en poids, de façon particulièrement préférée 3 à 35 % en poids, par rapport à la composition.

4. Composition selon l'une quelconque des revendications 1 à 3,
   **caractérisée en ce que**
   la teneur de la composition en les métaux et/ou alliages métalliques particulaires vaut de 1 à 95 % en poids, de préférence de 3 à 90 % en poids, de façon particulièrement préférée de 5 à 85 % en poids, de façon tout particulièrement préférée de 10 à 80 % en poids.

5. Composition selon l'une quelconque des revendications 1 à 4,
   **caractérisée en ce que**
   les additifs sont choisis dans la série des antimousses, épaississants, adjuvants de rhéologie, adjuvants de dispersion, agents anti-sédimentation, antirouilles, agents mouillants, pigments organiques, polymères ou dispersions de polymères ainsi que des catalyseurs pour la condensation et le durcissement.

6. Composition selon l'une quelconque des revendications 1 à 5,
   **caractérisée par**
   une teneur en additifs, en particulier en épaississant de 0 à 5 % en poids et/ou en agent anti-sédimentation de 0 à 5 % en poids et/ou en agent mouillant de 0 à 3 % en poids en agent anticorrosion de 0 à 1 % en poids chacun par rapport à la composition, la somme de tous les composants présents dans la composition étant égale à 100 % en poids.

7. Procédé pour la préparation d'une composition selon l'une quelconque des revendications 1 à 6,
   **caractérisé en ce que**
   d'abord on prépare un liant contenant au moins un produit de co-condensation à base d'un ω-glycidyloxyalkylalcoxysilane de formule I

   $$X\text{-}Si(R^2)_x(OR^1)_{3-x} \qquad (I),$$

   dans laquelle X représente un groupe 2-(3,4-époxy-cyclohexyl)éthyle, 1-glycidyloxyméthyle, 2-glycidyloxyéthyle, 3-glycidyloxypropyle ou 3-glycidyloxyisobutyle, $R^1$ ainsi que $R^2$ représentent indépendamment l'un de l'autre un groupe alkyle linéaire ou ramifié ayant de 1 à 4 atomes de carbone, et x est égal à 0 ou 1, et
   au moins une bis(alcoxysilylalkyl)amine de formule générale II

   $$(OR^1)_3Si\text{ - }A\text{ - }Si(OR^1)_3 \qquad (II),$$

   dans laquelle les groupes $R^1$ sont identiques ou différents et $R^1$ représente un groupe alkyle linéaire ou ramifié ayant de 1 à 4 atomes de carbone et A représente un groupe à fonction bis-amino de formule

$$- (CH_2)_i\text{-}[NH(CH_2)_f]_g NH[(CH_2)_{f^*}\text{-}NH]_{g^*}\text{-}(CH_2)_{i^*}\text{-} \qquad (IIa)$$

dans laquelle i, i*, f, f*, g ou g* sont identiques ou différents, avec i et/ou i* = 1, 2, 3 ou 4, f et/ou f* = 1 ou 2, g et/ou g* = 0 ou 1,

ainsi qu'en option au moins un autre composé de silicium de la série tétraalcoxysilane, alkylalcoxysilane, mercaptoalkylalcoxysilane, carboxyalkylalcoxysilane, aminoalkylalcoxysilane, uréidoalkylalcoxysilane, thiocyanatoalkylalcoxysilane et des sols de silice,

en

disposant au préalable de l'eau en un excès molaire par rapport aux silanes de formules I, II utilisés, ainsi qu'éventuellement aux composés de silicium précités, et en ajustant à un pH acide par addition d'un acide organique ou inorganique et en option en ajoutant en outre sous agitation un sol de silice,

en ajoutant par addition dosée un ω-glycidyloxyalkylalcoxysilane de formule I et en chauffant,

en option en ajoutant ensuite par addition dosée un acide

et en ajoutant par addition dosée au moins une bis(alcoxysilylalkyl)amine de formule générale II ainsi qu'en option au moins un autre composé de silicium de la série tétraalcoxysilane, alkylalcoxysilane, mercaptoalkylalcoxysilane, carboxyalkylalcoxysilane, aminoalkylalcoxysilane, uréidoalkylalcoxysilane et isocyanatoalkylalcoxysilane et en faisant réagir, ensuite en séparant sous pression réduite du mélange réactionnel au moins en partie l'alcool d'hydrolyse ainsi formé,

en option en diluant ou respectivement ajustant le pH avec de l'eau et/ou avec un acide aqueux et/ou une base aqueuse le liant ainsi obtenu et ensuite en le filtrant,

et

en dispersant dans le liant ainsi obtenu au moins un ajout de la série des métaux et/ou alliages métalliques particulaires et en option en délayant au moins un additif et en option en ajustant le pH dans la composition.

8. Procédé selon la revendication 7,
**caractérisé en ce**
**qu'**on utilise l'ω-glycidyloxyalkylalcoxysilane de formule I en un excès molaire par rapport à la bis(alcoxysilylalkyl)amine de formule générale II de 0,1 : 99,9 à 99 : 1, en particulier on utilise l'ω-glycidyloxyalkylalcoxysilane dans le liant à une concentration de 0,001 à 42 % en moles, de préférence de 0,01 à 30 % en moles, de façon particulièrement préférée de 0,1 à 15 % en moles, de façon tout particulièrement préférée de 0,2 à 1,5 % en moles.

9. Procédé selon la revendication 7 ou 8,
**caractérisé en ce**
**qu'**on dispose au préalable sous un gaz protecteur l'eau en un excès molaire, par rapport aux silanes de formules I et II utilisés ainsi qu'en option aux composés de silicium précités, convenablement de 2 à 1 000 moles d'eau, de préférence de 5 à 500 moles d'eau, en particulier de 10 à 100 moles d'eau par mole des groupes alcoxy présents, liés à Si, des silanes utilisés, la réaction étant effectuée de préférence sous azote ou argon.

10. Procédé selon l'une quelconque des revendications 7 à 9,
**caractérisé en ce que**
l'acide organique ou inorganique est choisi dans la série constituée par l'acide formique, l'acide acétique, l'acide propionique, l'acide chlorhydrique, l'acide nitrique, l'acide sulfurique, l'acide phosphorique, et la base aqueuse est choisie dans la série constituée par une solution d'hydroxyde de sodium, une solution d'hydroxyde de potassium, la N,N-diméthyléthanolamine, le zirconate de tétrakis-(triéthanolamine), et on ajuste le pH pendant et/ou après la réaction dans le liant et/ou après formulation dans la composition à 1 à 14, de préférence 2 à 12, de façon particulièrement préférée 2,5 à 9, de façon tout particulièrement préférée 3 à 8, en particulier à 3,5 ; 4 ; 4, 5 ; 5 ; 5, 5 ; 6 ; 6, 5 ; 7 ; 7, 5 ; 8 ainsi que 8,5, l'addition du métal ou de l'alliage métallique particulaire au liant pouvant conduire à une modification du pH, de préférence, dans le cas d'addition de zinc ou d'un alliage de zinc, à un liant ajusté à un pH acide.

11. Procédé selon l'une quelconque des revendications 7 à 10,
**caractérisé en ce**
**qu'**en tant qu'ω-glycidyloxyalkylalcoxysilane de formule I on introduit comme charge ou ajoute par addition dosée du 3-glycidyloxypropyltriméthoxysilane et/ou du 3-glycidyloxypropyltriéthoxysilane et on chauffe pendant 0,1 à 3 heures, de préférence 0,5 à 2 heures le mélange aqueux acide obtenu, sous agitation ou mélangeage, à une température de 50 à 90 °C, de préférence de 60 à 65 °C.

12. Procédé selon l'une quelconque des revendications 7 à 11,

**caractérisé en ce**

**qu'**on ajoute par addition dosée au mélange chauffé, acide et contenant un ω-glycidyloxyalkylalcoxysilane, à un pH de 2 à 6, de préférence de 3 à 5, de la bis(triméthoxysilylpropyl)amine et/ou de la bis(triéthoxysilylpropyl)amine et en option en tant qu'autre composé de silicium un tétraalcoxysilane, de préférence du tétraméthoxysilane, du tétraéthoxysilane, un alkylalcoxysilane, de préférence un alkyl($C_1$-$C_{16}$)-alcoxysilane, en particulier du méthyltriméthoxysilane, du méthyltriéthoxysilane, du n-propyltriméthoxysilane (PTMO), du n-propyltriéthoxysilane (PTEO), de l'isobutyltriméthoxysilane (IBTMO), de l'isobutyl-triéthoxysilane (IBTEO), de l'octyltriméthoxysilane (OCTMO), de l'octyltriéthoxysilane (OCTEO), un mercaptoalkylalcoxysilane, de préférence du 3-mercapto-propyltriméthoxysilane (MTMO), du mercaptopropyl-triméthoxysilane (MTEO), un amidoalkylalcoxysilane, de préférence du 3-aminopropyltriméthoxysilane (AMMO), du 3-aminopropyltriéthoxysilane (AMEO), du N-(2-amino-éthyl)-3-aminopropyltriméthoxysilane (DAMO), du N-(2-aminoéthyl)-3-aminopropyltriéthoxysilane, du N,N'-diaminoéthyl-3-aminopropyltriméthoxysilane (TriAMO), du N,N'-diaminoéthyl-3-aminopropyltriéthoxysilane, un carboxyalkyltrialcoxysilane, un uréidoalkylalcoxysilane, de préférence du 3-uréidopropyltriméthoxy-silane, du 3-uréidopropyltriéthoxysilane et/ou un thiocyanatoalkylalcoxysilane, de préférence du 3-thiocyanatopropyltriméthoxysilane, du 3-thiocyanatopropyltriméthoxysilane, et on fait réagir pendant 0,3 à 6 heures, de préférence 1 à 4 heures, sous agitation, à une température de 50 à 90 °C, de préférence de 60 à 65 °C, c'est-à-dire que les alcoxysilanes utilisés sont pratiquement totalement hydrolysés et condensés ou co-condensés.

13. Utilisation d'une composition selon l'une quelconque des revendications 1 à 6 ou préparée selon l'une quelconque des revendications 7 à 12, pour des revêtements qui durcissent à l'air à une température de 16 à 26 °C.

14. Utilisation selon la revendication 13 pour des revêtements de métaux et d'alliages métalliques pour la protection contre la corrosion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0590270 A
- DE 10335178
- US 5051129 A
- EP 0716128 A
- WO 200039177 A
- US 6955728 B
- WO 2004076717 A
- WO 2004076718 A
- US 5206285 A
- EP 1760128 A
- DE 102004037045
- US 6468336 B
- EP 1191075 A
- WO 200046311 A
- WO 200222745 A
- WO 2003022940 A
- WO 2006079516 A
- EP 1191075 B1
- WO 9914277 A
- WO 2008133916 A
- US 6929826 B
- WO 2006137663 A
- WO 2009059798 A
- EP 0274428 A
- WO 2009030538 A